# EUROPEAN PATENT SPECIFICATION

(11) **EP 3 645 417 B1**
(45) Date of publication and mention of the grant of the patent: **02.08.2023**
(21) Application number: 18738427.6
(22) Date of filing: 29.06.2018
(51) Int. Cl.: B65D 81/26

(54) **METHODS OF PACKAGING AND PRESERVING MOLLUSKS**
VERFAHREN ZUR VERPACKUNG UND KONSERVIERUNG VON WIRBELLOSEN TIEREN
PROCÉDÉ D'EMBALLAGE ET DE CONSERVATION DE MOLLUSQUES

(30) Priority: 30.06.2017 US 201762527231 P; 13.11.2017 WO PCT/US2017/061389; 09.03.2018 US 201862641182 P; 11.05.2018 US 201862670610 P
(43) Date of publication of application: 06.05.2020
(73) Proprietor: CSP Technologies, Inc., Auburn, AL 36832 (US)
(72) Inventor: RILEY, Derek, Mabelton Georgia 30126 (US); JOHNSTON, Michael, Marietta Georgia 30060 (US); WATSON, Neal, Tyrone Georgia 20290 (US); BELFANCE, John, Phenix Alabama 36867 (US); FREEDMAN, Jonathan R., Auburn Alabama 36830 (US); GUPTA, Deepti S., Glenn Allen Virginia 23059 (US); LUCAS, JR., Franklin Lee, Opelika Alabama 36801 (US); PRATT, Jason, Auburn Alabama 32832 (US); GUSTAFSON, Kathyrn, Helena Alabama 35080 (US); FOUTCH, G. F. Alexia, Madison Wisconsin 53714-1725 (US); PERDUE, Ethan Ross, Auburn Alabama 36830 (US); HOLLINGER, James S., Auburn Alabama 36879 (US)
(74) Representative: Maiwald GmbH
(86) International application number: PCT/US2018/040482
(87) International publication number: WO 2019/006419

(56) References cited:
- WO-A1-00/00409
- WO-A1-98/32661
- WO-A1-2008/091466
- WO-A2-2012/122427
- DE-A1- 19 508 484

## Description

### BACKGROUND OF THE INVENTION

### 1. FIELD OF INVENTION

The present invention relates generally to methods for packaging and preserving mollusks, such as oysters and scallops. More particularly, the present invention relates to use of packaging for comestible mollusk material, preferably for fresh mollusks. Packaging according to the present invention has been found to improve shelf life of such products.

### 2. DESCRIPTION OF RELATED ART

Standard bulk packaging for fresh mollusks is typically achieved using metal or plastic cans, trays or tubs. Live mollusks may be packaged in mesh bags. Mollusks exude liquid, which tends to pool in the bottom of conventional mollusk packaging. In this manner, mollusks in a conventional package will often sit within their own exudate, which causes the food to quickly degrade. Fresh mollusks packaged in this manner and stored above freezing typically do not last more than six days. Even then, the seafood is often discolored and presents an unpleasant odor. In the case of live mollusks (e.g., oysters or clams in their shells), storage of such products in conventional packages typically results in a significant percentage of them dying in less than one week.

Short shelf life is a big problem in the seafood market because by the time fresh seafood reaches the shelves for wholesale or retail purchase, it has typically already lost a good portion of its useful life between catching, packaging, warehousing and shipping. Accordingly, there is a strong need for improved packaging for comestible mollusk material, which extends the shelf life.

WO 2000/000409 A1 describes containers in which liquids are collected into a dedicated space in their lower part through a permeable support whereupon the packaged material is placed. An absorbent placed in said space is also described.

### SUMMARY OF THE INVENTION

Accordingly, the present invention provides a method of packaging and preserving comestible mollusk material. The method includes placing comestible mollusk material in a product containing space of a storage container atop a platform of a support structure. The storage container includes an internal compartment having the product containing space, the support structure defining the platform for supporting the comestible mollusk material. The internal compartment further includes a reservoir below the platform. The reservoir is configured to retain liquid. The reservoir comprises an absorbent material. The platform and/or support structure are configured to direct liquid exuded from the comestible mollusk material to the reservoir. The storage container also comprises an oxygen permeable lid enclosing the comestible mollusk material within the product containing space.

The present invention also provides a filled and closed package comprising an assembled storage container with comestible mollusk material stored in a product containing space within the storage container, the storage container comprising an internal compartment having the product containing space and a support structure defining a platform for supporting the comestible mollusk material, the internal compartment further comprising a reservoir below the platform, the reservoir being configured to retain liquid, the platform and/or support structure being configured to direct liquid exuded from the comestible mollusk material to the reservoir. The storage container further comprises an absorbent material in the reservoir and an oxygen permeable lid disposed over an opening to the storage container to enclose the comestible mollusk material within the product containing space.

Optionally, in any embodiment, the support structure and/or platform may include one or more of: a liquid permeable surface; one or more openings; and a ramp providing for liquid runoff from a side of the platform.

Optionally, in any embodiment, the storage container is formed from a thermoformed polymer tray. Optionally, in any embodiment, the storage container is formed from a material other than a polymer.

Optionally, the absorbent material includes a gel-forming polymer.

Optionally, the oxygen permeable lid is a lidding film.

### BRIEF DESCRIPTION OF SEVERAL VIEWS OF THE DRAWINGS

The invention will be described in conjunction with the following drawings in which like reference numerals designate like elements and wherein:
Fig. 1A is a partially exploded isometric view of a storage container that may be used according to the invention.
Fig. 1B is a section view of the storage container of Fig. 1 with comestible mollusk material stored therein.
Fig. 2A is a partially exploded isometric view of a storage container that may be used according to the invention.
Fig. 2B is a section view of the storage container of Fig. 2 with comestible mollusk material stored therein.
Fig. 3A is a partially exploded isometric view of a storage container that may be used according to the invention.
Fig. 3B is a section view of the storage container of Fig. 3A with comestible mollusk material stored therein.
Fig. 4A is a partially exploded isometric view of a storage container that may be used according to the invention.
Fig. 4B is a section view of the storage container of Fig. 4A with comestible mollusk material stored therein.
Fig. 5A is a partially exploded isometric view of a storage container that is a variation of the storage container of Figs. 4A and 4B, and that may be used according to the invention.
Fig. 5B is a section view of the storage container of Fig. 5A with comestible mollusk material stored therein.
Fig. 6A is a perspective view of a storage container that may be used according to the invention.
Fig. 6B is a section view of the storage container of Fig. 6A with comestible mollusk material stored therein.
Fig. 7A is a partially exploded isometric view of a storage container that may be used according to the invention.
Fig. 7B is a section view of the storage container of Fig. 7A with comestible mollusk material stored therein.
Fig. 8 is a series of photographs illustrating the fresh and white appearance of scallops stored according to the invention for 13 days compared to the discolored yellow appearance of scallops stored for 13 days in a control tub.
Fig. 9 is a line graph illustrating data showing log reduction in bacteria in scallops stored according to the invention compared to a control.
Fig. 10 is line graph illustrating data showing log reduction in yeast and mold in scallops stored according to the invention compared to a control.
Fig. 11 is a line graph illustrating data of percent dead clams stored according to the invention compared to a control.
Fig. 12 is a line graph illustrating sensory analysis of appearance data in clams stored according to the invention compared to a control.
Fig. 13 is a line graph illustrating sensory analysis of smell data of clams stored according to the invention compared to a control.
Fig. 14 is a line graph illustrating aerobic plate count data of raw shucked clam strips stored according to the invention compared to a control.
Fig. 15 is a line graph illustrating aerobic plate count (coliform) data of raw shucked clam strips stored according to the invention compared to a control.
Fig. 16 is a line graph illustrating data of percent dead mussels stored according to the invention compared to a control.
Fig. 17 is a line graph illustrating sensory analysis data of mussels stored according to the invention compared to a control.
Fig. 18 is a line graph illustrating data of percent dead oysters stored according to the invention compared to a control.

### DETAILED DESCRIPTION OF PREFERRED EMBODIMENTS OF THE INVENTION

Any headings used herein are for organizational purposes only and are not meant to limit the scope of the description. As used herein, the word "may" is used in a permissive sense (i.e., meaning having the potential to) rather than the mandatory sense (i.e., meaning must). Unless specifically set forth herein, the terms "a," "an" and "the" are not limited to one element but instead should be read as meaning "at least one."

### Definitions

As used herein, the term "comestible mollusk material" refers to mollusk seafood that is fit for consumption, e.g., after preparation such as by cooking. The term "comestible mollusk material" can refer to edible portions of the mollusk as well as nonedible portions of the mollusk that are packaged with the edible portions, in a storage container. For example, some mollusks are typically packaged alive and inside their shells, e.g., oysters and clams. While the shells would not themselves be considered edible, they are encompassed within the phrase "comestible mollusk material" because they are provided as part of the mollusk material as packaged in the storage container.

As used herein, the term "fresh," e.g., as in "fresh comestible mollusk material," refers to seafood that is stored in temperatures above freezing, whether the seafood is dead or living. Previously frozen seafood may be considered "fresh" once it is stored above freezing.

As used herein, the term "platform" generally refers to a bed or floor atop which comestible mollusk material can be placed for storage. The term "platform" may optionally include a single, continuous supporting surface. For example, the platform may include a tabletop-like solid surface, a slanted roof-like solid surface or a convex-shaped solid surface. In another example of a single, continuous supporting surface embodiment of a platform, a substantially flat filter or membrane (such as a non-woven material) may be provided. Alternatively, the platform may include a surface comprising small openings akin to a food strainer, a mesh or a screen. Alternatively, the term "platform" as used herein may refer to a plurality of separate supporting surfaces that cumulatively provide a bed or floor atop which comestible mollusk material can be placed for storage. In optional embodiments, the platform may include a food contacting surface (e.g., of a filter), a filter or membrane and a supporting surface (e.g., upper surface of a rib or mesh screen) directly beneath it. Optionally, the platform is integral with the remainder of the storage container. Alternatively, the platform is or comprises a separate component that is assembled with or removably disposed within the remainder of the storage container.

### Storage Containers

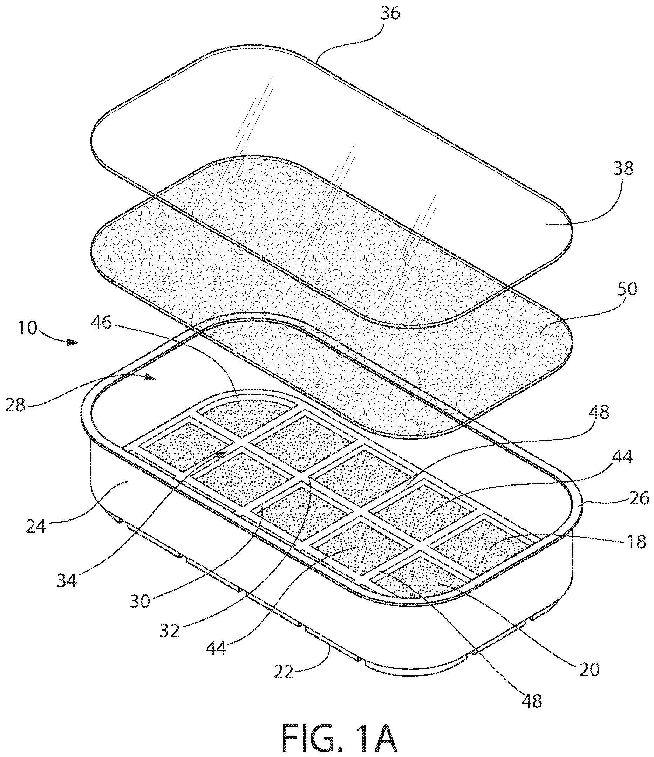

Referring now in detail to the various figures wherein like reference numerals refer to like parts, there are shown in Figs. 1A to 7B various storage containers 10, 110, 210, 310, 410, 510, 610 that may be used according to the present invention. To the extent that the various storage containers include elements common to two or more (in some cases, all) storage containers, such elements are substantially described herein simultaneously, for brevity. A skilled artisan would readily understand that in appropriate circumstances, various elements of the different storage containers disclosed herein could be combined.

The storage container 10, 110, 210, 310, 410, 510, 610 comprises an internal compartment 12, 112, 212, 312, 412, 512, 612 having a product containing space 14, 114, 214, 314, 414, 514, 614 for holding comestible mollusk material 16 and a reservoir 18, 118, 218, 318, 418, 518, 618 below the product containing space 14, 114, 214, 314, 414, 514, 614. The reservoir 18, 118, 218, 318, 418, 518, 618 is configured to retain liquid exudate from the comestible mollusk material 16.

As depicted in the figures, the comestible mollusk material 16 are live clams in their shells. This is merely representative and not limiting with respect to the types of comestible mollusk material that may be stored in the storage containers 10, 110, 210, 310, 410, 510, 610. The fact that the shells are illustrated in a closed position indicates that the clams therein are live. Optionally, in any embodiment, the comestible mollusk material may include one or more of the following species: octopus, squid, snail, scallop, oyster, mussel, clam, chiton and abalone. The foregoing list is illustrative and not exhaustive; other comestible mollusk material may be stored according to the present invention. In some cases, the comestible mollusk material may be shucked (removed from their shells, in the case of bivalves and gastropods, for example). In other cases, bivalve comestible mollusk material may be provided live, with the shell.

An absorbent material 20 is provided within the reservoir 18, 118, 218, 318, 418, 518, 618. In any embodiment, the absorbent material may be in the form of one or more of: absorbent powders, granules, fibers, a sponge, a gel and a coating on a surface within the reservoir, for example. A preferred absorbent material includes solid powder or granules that form a gel upon absorbing liquid. In this manner, when liquid exuded from the comestible mollusk material 16 flows or drips into the reservoir 18, 118, 218, 318, 418, 518, 618, the absorbent material 20 absorbs the liquid (e.g., by becoming gelatinous) so as to prevent the liquid from splashing, flowing or leaking from the reservoir 18, 118, 218, 318, 418, 518, 618 back into the product containing space 14, 114, 214, 314, 414, 514, 614. Optional absorbent materials for use in any embodiment of the present invention are further elaborated upon below.

The storage container 10, 110, 210, 310, 410, 510, 610 optionally comprises a base 22, 122, 222, 322, 422, 522, 622 and a sidewall 24, 124, 224, 324, 424, 524, 624 extending upwardly from the base 22, 122, 222, 322, 422, 522, 622. The base 22, 122, 222, 322, 422, 522, 622 and at least a portion of the sidewall 24, 124, 224, 324, 424, 524, 624 (e.g., a portion directly and continuously extending from the base 22, 122, 222, 322, 422, 522, 622) define the reservoir 18, 118, 218, 318, 418, 518, 618. The reservoir 18, 118, 218, 318, 418, 518, 618 is preferably fully enclosed along the base 22, 122, 222, 322, 422, 522, 622 and along at least a portion of the sidewall 24, 124, 224, 324, 424, 524, 624 extending directly and continuously from the base 22, 122, 222, 322, 422, 522, 622 . In this manner, the reservoir 18, 118, 218, 318, 418, 518, 618 is configured to retain liquid, such as liquid exudate from mollusk material packaged in the storage container 10, 110, 210, 310, 410, 510, 610. Accordingly, the reservoir 18, 118, 218, 318, 418, 518, 618 is configured to prevent liquid received therein from leaking outside of the storage container 10, 110, 210, 310, 410, 510, 610. Optionally, the sidewall 24, 124, 224, 324, 424, 624 terminates at a peripheral edge 26, 126, 226, 326, 426, 626 surrounding a container opening 28, 128, 228, 328, 428, 628 through which comestible mollusk material may be deposited into the storage container 10, 110, 210, 310, 410, 610 or removed therefrom.

The storage container 10, 110, 210, 310, 410, 510, 610 further comprises a support structure 30, 130, 230, 330, 430, 530, 630 disposed in the internal compartment 12, 112, 212, 312, 412, 512, 612. At least a portion of the support structure 30, 130, 230, 330, 430, 530, 630 is rigid or semi rigid, so as to retain its shape under gravity and to support a predetermined amount of comestible mollusk material without collapsing under the weight of the same. The support structure 30, 130, 230, 330, 430, 530, 630 defines at least a portion of a platform 32, 132, 232, 332, 432, 532, 632 at an upper end 34, 134, 234, 334, 434, 534, 634 thereof. The platform 32, 132, 232, 332, 432, 532, 632 is located above the reservoir 18, 118, 218, 318, 418, 518, 618 (i.e., at a height above the height of the reservoir, whether or not the comestible mollusk material is at a location axially aligned with the reservoir directly below). In some embodiments, the platform is itself a surface at the upper end of the support structure. In other embodiments, the platform comprises the aforementioned surface as well as a cover, layer or membrane placed thereon. The optional cover, as a component of a platform according to some embodiments, is further discussed below.

In any case, the support structure 30, 130, 230, 330, 430, 530, 630 and platform 32, 132, 232, 332, 432, 532, 632 are configured to support comestible mollusk material 16 placed thereon. For example, the support structure 30, 130, 230, 330, 430, 530, 630 may be configured to hold up to 5 pounds (2.27 kg), optionally up to 10 pounds (4.54 kg), optionally up to 15 pounds (6.80 kg), optionally up to 20 pounds (9.07 kg) of comestible mollusk material over a period of at least two weeks, without collapsing under the weight of the same. Ultimately, the support structure 30, 130, 230, 330, 430, 530, 630 and the platform 32, 132, 232, 332, 432, 532, 632 are configured to suspend comestible mollusk material 16 above the reservoir 18, 118, 218, 318, 418, 518, 618 so as to separate the comestible mollusk material 16 from its exuded juices, which may, via gravity, be directed into the reservoir 18, 118, 218, 318, 418, 518, 618.

The platform 32, 132, 232, 332, 432, 532, 632 and/or support structure 30, 130, 230, 330, 430, 530, 630 are configured to direct liquid exuded from the comestible mollusk material 16 to the reservoir 18, 118, 218, 318, 418, 518, 618. This may be achieved in a variety of ways, exemplary implementations of which are elaborated upon below.

The storage container 10, 110, 210, 310, 410, 510, 610 includes a lid 36, 136, 236, 336, 436, 536, 636 to enclose the comestible mollusk material 16 within the storage container 10, 110, 210, 310, 410, 510, 610. In some embodiments (not shown), the lid may include a rigid or semi-rigid removable and replaceable closure means, e.g., a snap on lid. Preferably, the lid 36, 136, 236, 336, 436, 636 comprises a flexible lidding film 38, 138, 238, 338, 438, 638. Examples of a lid 36, 136, 236, 336, 436, 636 comprising a flexible lidding film 38, 138, 238, 338, 438, 638 are shown covering and enclosing internal compartments 12, 112, 212, 312, 412, 612 of storage containers 10, 110, 210, 310, 410, 610. As shown in the figures, the lidding film 38, 138,238, 338, 438, 638 is depicted as having an exaggerated thickness, just so that it is more clearly visible in the figures. In reality, the film's thickness would preferably be less than depicted. For example, the film may be from 0.001 inches to 0.003 inches thick.

Optionally, the lidding film 38, 138, 238, 338, 438, 638 is secured to the peripheral edge 26, 126, 226, 326, 426, 626 of the side wall 24, 124, 224, 324, 424, 624 of the storage container 10, 110, 210, 310, 410, 610, e.g., by a tie layer. Optionally, the tie layer is a polyethylene tie layer that is optionally co-extruded onto the peripheral edge 26, 126, 226, 326, 426, 626, to bond the lidding film 38, 138, 238, 338, 438, 638 thereto by a heat seal 40, 140, 240, 340, 440, 640.

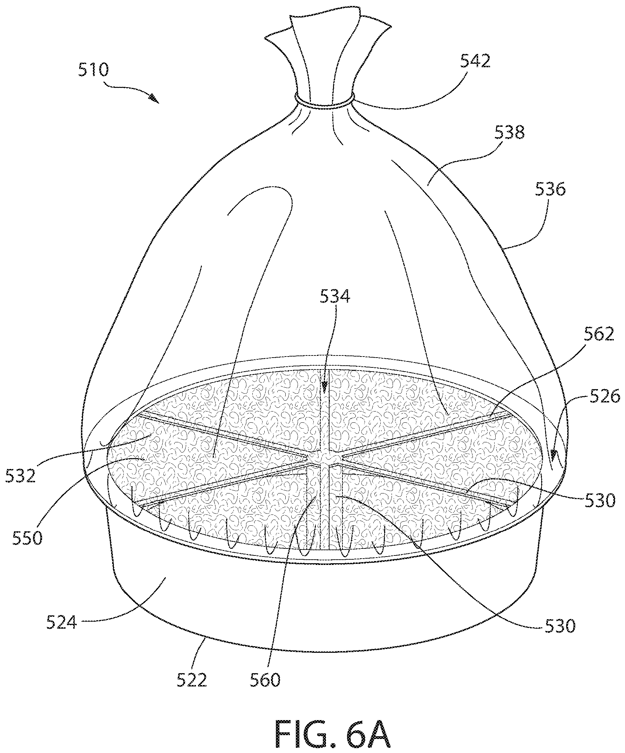

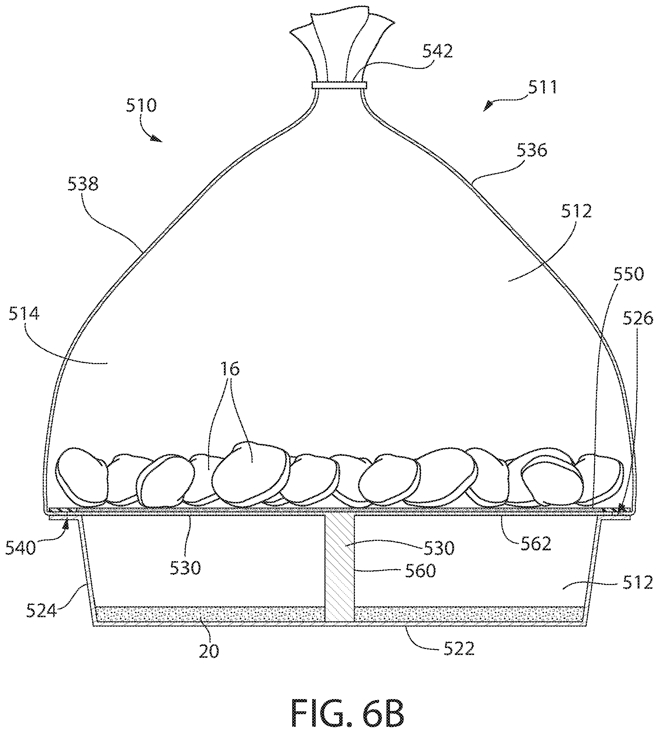

Alternatively, as shown in Figs. 6A and 6B, the lid 536 may be in the form of a flexible bag or wrap 538 configured to enclose the comestible mollusk material 16 within the product containing space 514. The bag or wrap 538 is optionally secured to a peripheral edge 526 of the sidewall 524 of the storage container 510 (e.g., by a tie layer and heat seal 540, as described above) and may be sealed or crimped closed at a top portion 542 thereof. In an alternative embodiment (not shown), the bag or wrap may include a closed bottom into which the tray is placed (such that the bottom of the bag is oriented below the tray), with the bag or wrap sealed or crimped closed at a top portion thereof.

Regardless of the form of the lid, it is important that the 1id provide a desirable oxygen transmission rate for mollusks. Packaging that provides an oxygen transmission rate of 10,000 cc/m²/24hrs at 24°C, or higher, is regarded as an oxygen-permeable packaging material for seafood products. An oxygen permeable package should provide sufficient exchange of oxygen to allow naturally occurring, aerobic spoilage organisms on the seafood product to grow and spoil the product before toxin is produced under moderate abuse temperatures. Thus, in one embodiment, a lidding film 38, 138, 238, 338, 438, 638 or wrap 538 is disposed over the product containing space 14, 114, 214, 314, 414, 514, 614 to enclose the comestible mollusk material 16 stored therein so as to provide an oxygen permeable package. Optionally, the storage container is enclosed with a lidding film that provides an oxygen transmission rate of at least 10,000 cc/m²/24hrs at standard temperature and pressure (ASTM D3985). Such film is known in the field as a 10K OTR lidding film. Some products benefit from a much lower oxygen transmission rate. For example, in an embodiment, a lidding film providing less than 100 cc/m²/24hrs may be used. Optionally, the lidding film is transparent, which allows a user to view the quality of the seafood stored in the storage container. Preferably, the lidding film is a polyethylene composition, optionally a biaxially stretched polyethylene composition. For example, the lidding film may be the PLASTOFRESH 10K by PLASTOPIL or the 10K OTR Vacuum Skin Package film by CRYOVAC^{®}.

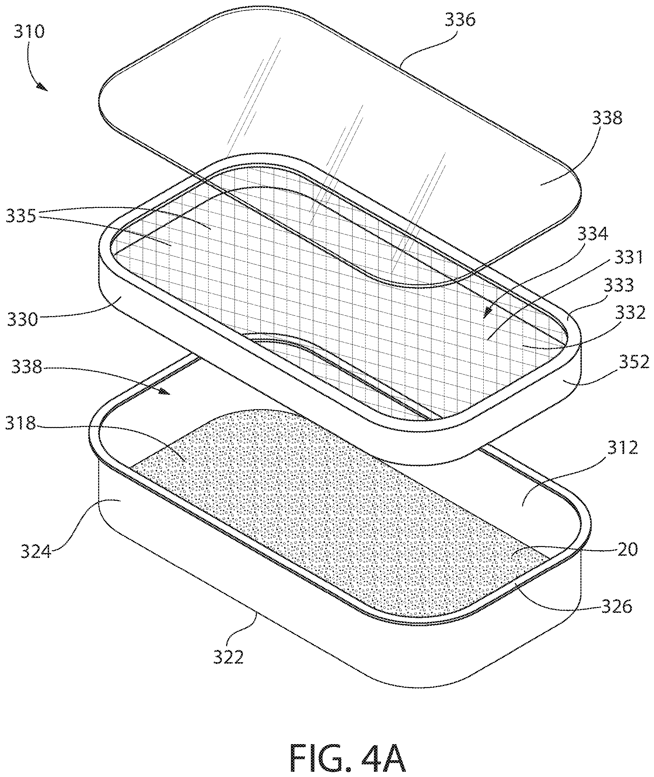

In some embodiments (see, e.g., Figs. 1A-3B, and 5A-5B), the reservoir 18, 118, 218, 418 is divided into separate wells or compartments 44, 144, 244, 444. In other embodiments (see, e.g., Fig. 4A-4B), the reservoir 318 comprises a single continuous compartment beneath the platform 332. At least the base 22, 122, 222, 322, 422, 522, 622 and a portion of the sidewall 24, 124, 224, 324, 424, 624 extending therefrom are preferably composed of a rigid or semi-rigid polymer, optionally polypropylene or polyethylene. For example, at least portions of the reservoir 18, 118, 218, 318, 418, 518, 618 are configured to have sufficient rigidity to retain the shape of the reservoir under gravity, in contrast, for example, to a bag or pouch that lacks a rigid frame. The storage container 10, 110, 210, 310, 410, 510, 610 is preferably disposable. Optionally, at least a portion of the storage container 10, 110, 210, 310, 410, 510, 610 comprises a thermoformed plastic tray (e.g., forming the base 22, 122, 222, 322, 422, 522, 622 and at least a portion of the sidewall 24, 124, 224, 324, 424, 624 extending therefrom).

The present invention also provides a filled and closed package 11, 111, 211, 311, 411, 511, 611, comprising the assembled storage container 10, 110, 210, 310, 410, 510, 610 with comestible mollusk material 16 stored therein and with the lid 36, 136, 236, 336, 436, 536, 636 enclosing the comestible mollusk material 16 within the storage container 10, 110, 210, 310, 410, 510, 610.

Elements common to two or more storage container embodiments were described simultaneously above, for brevity. At this point in the disclosure, specific details and features relating to each of the exemplary storage containers will be elaborated upon or, as the case may be, introduced. It should be understood that description of any of the basic or common aspects shared by two or more containers will not necessarily be repeated here, since they have already been described above. The following details of the above-described containers serve to supplement the disclosure of the various storage containers 10, 110, 210, 310, 410, 610 set forth above.

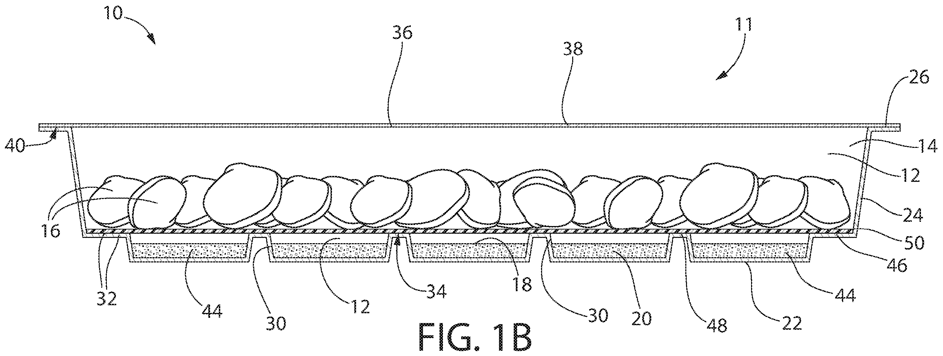

Figs. 1A and 1B show a storage container 10, which is optionally formed from a thermoformed polymer tray (although other materials may be used). The storage container 10 includes a support structure 30 in the internal compartment 12. The support structure 30 includes a perimeter rib 46 running along an entire perimeter of the sidewall 24 and a plurality of intersecting ribs 48, each of which extends from the perimeter rib 46, across the base 22 and to an opposite end of the perimeter rib 46. The upper end 34 of the support structure 30 forms a portion of the platform 32. Preferably, the platform 32 also includes a cover 50, optionally made from a filter or membrane, e.g., comprising a non-woven material. The cover 50 thus provides a liquid permeable surface, which is configured to direct liquid exuded from the comestible mollusk material 16 into the reservoir 18. As shown, an absorbent material 20 is provided in the wells 44 of the reservoir 18.

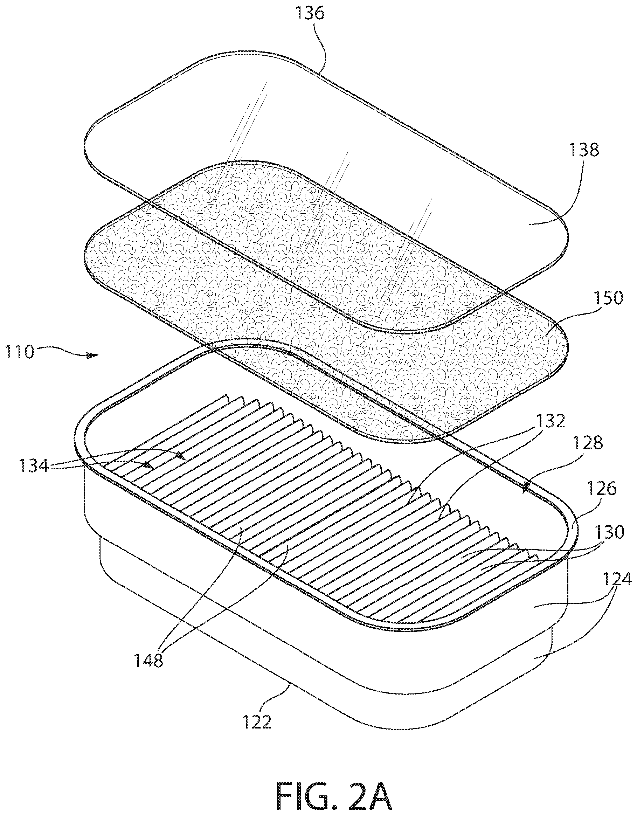

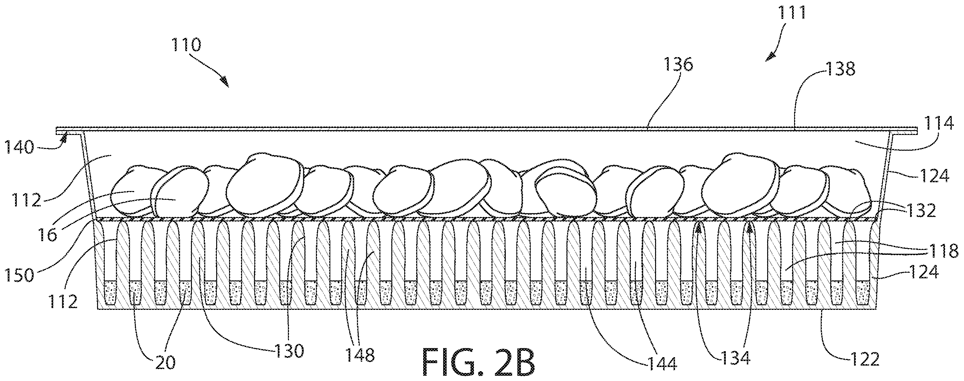

Figs. 2A and 2B show another storage container 110, which is optionally formed from a thermoformed polymer tray (although other materials may be used). The support structure 130 is corrugated and includes a plurality of spaced ribs 148 extending across the base 122, from one end of the sidewall 124 to the other. The ribs 148 may resemble steep (essentially vertical) rolling hills with deep valleys therebetween. The "peaks" of the "hills" constitute the upper end 134 of the support structure 130 and the "valleys" provide the wells or compartments 144 of the reservoir 118. The upper end 134 of the support structure 130 forms a portion of the platform 132. Preferably, the platform 132 also includes a cover 150, optionally made from a filter or membrane, e.g., comprising a non-woven material. The cover 150 thus provides a liquid permeable surface, which is configured to direct liquid exuded from the comestible mollusk material 16 into the reservoir 118. As shown, an absorbent material 20 is provided in the wells or compartments 144 of the reservoir 118.

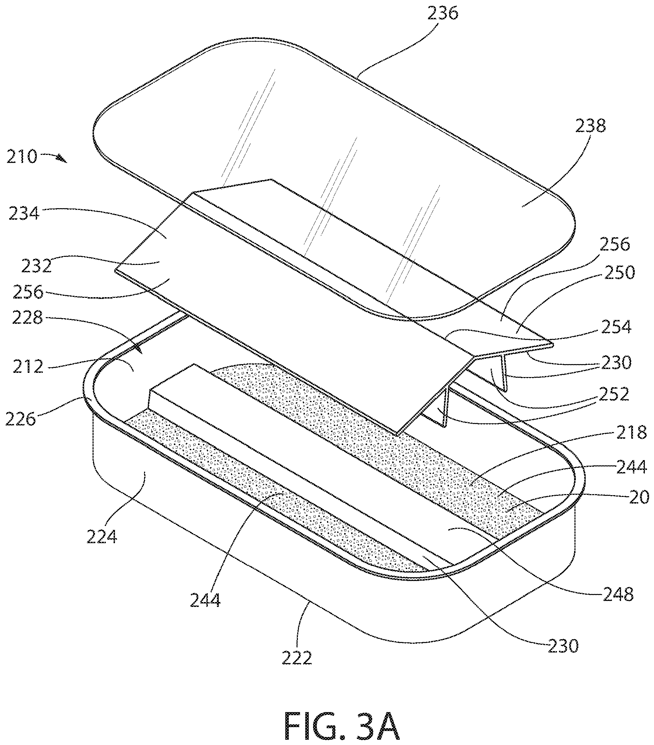

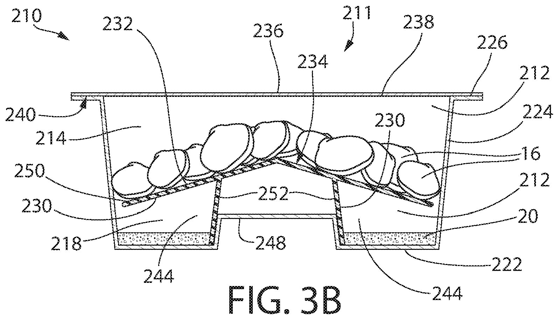

Figs. 3A and 3B show another storage container 210, which is optionally formed from a thermoformed polymer tray (although other materials may be used). A central rib 248 extends longitudinally along the base 222 from one end of the sidewall 224 to an opposite end of the sidewall 224. A pair of flanges 252 extend downward from the cover 250 and are together configured to form a press-fit engagement with the rib 248. In this way, the rib 248 and flanges 248 form portions of the support structure 230, the upper end 234 of which forms the platform 232 and cover 250. The cover 250 is optionally rigid or semi-rigid and is optionally liquid impermeable (unlike, for example, the covers 50, 150 of Figs. 1A-2B). The platform 232 comprises a central peak 254, wherein the platform 232, on each side of the peak 254, comprises a downwardly inclined ramp 256 providing for liquid runoff from a side of the platform 232. Optionally (not shown), the platform comprises a convex sectional profile. The support structure 230 and/or platform 232 are thus configured to direct liquid exuded from the comestible mollusk material 16 into the reservoir 218. As shown, an absorbent material 20 is provided in the wells or compartments 244 (on either side of the rib 248) of the reservoir 218.

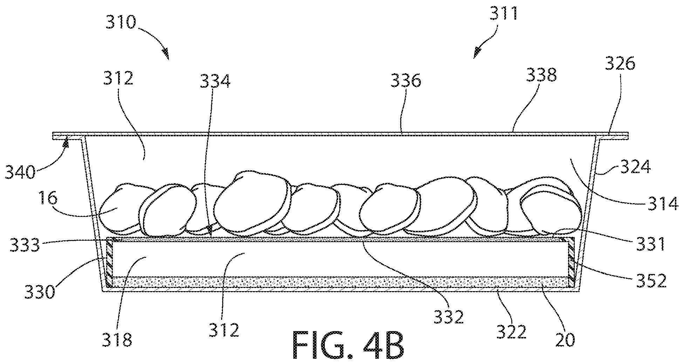

Figs. 4A and 4B show another storage container 310, which is optionally formed from a thermoformed polymer tray (although other materials may be used). The reservoir 318 is not subdivided into individual distinct compartments or wells, but is rather provided as one single compartment occupying essentially the entire footprint of the base 322. The platform 332 optionally comprises a mesh material 331 that is retained in place by a frame 333 of the support structure 330. The support structure 330 further comprises a flange 352, optionally projecting downwardly from and about the perimeter of the frame 333. The flange 352 of the support structure 330 thus operates to suspend the platform 332 above the reservoir 318. In this way, the platform 332 provides openings 335 configured to direct liquid exuded from the comestible mollusk material 16 into the reservoir 318. Optionally (not shown), the platform 332 further includes a liquid permeable cover (such as 50), e.g., disposed atop the mesh material 331. As shown, an absorbent material 20 is provided in the reservoir 318.

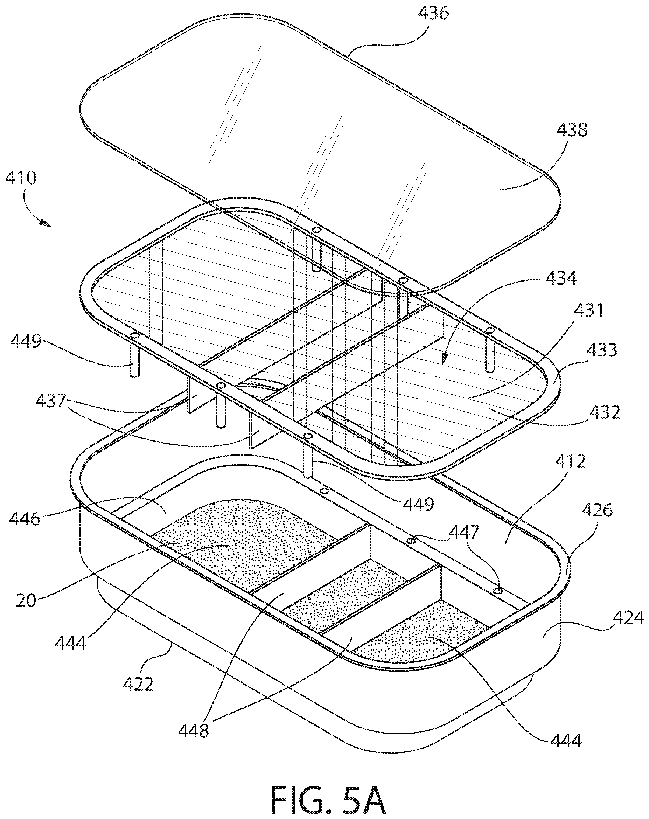

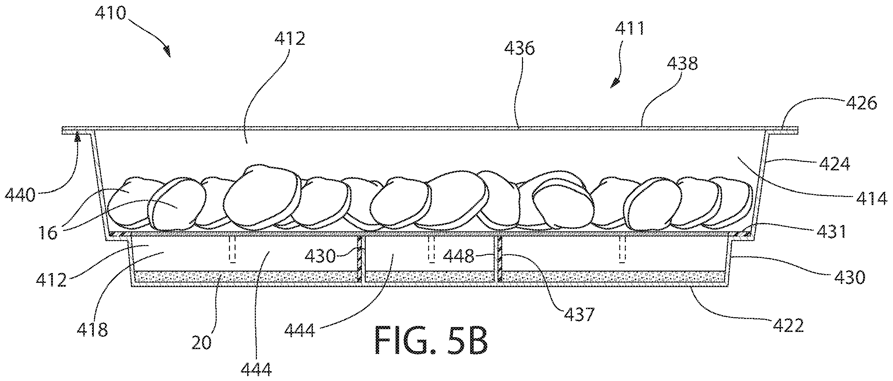

Figs. 5A and 5B show another storage container 410, which is optionally formed from a thermoformed polymer tray (although other materials may be used). The platform 432 optionally comprises a mesh material 431 that is retained in place by a frame 433 of the support structure 430. The upper end 434 of the support structure 430 forms a portion of the platform 432. The support structure 430 further includes a perimeter rib 446 running along an entire perimeter of the sidewall 424. In addition, the support structure 430 optionally includes two ribs 448 spanning the width of the base 422 from one side of the perimeter rib to the other and optionally two flanges 437 projecting downwardly from the platform 432 and spanning the width thereof. The support structure 430 is configured such that each flange 437 engages a corresponding rib 448 to stabilize the platform 432 within the internal compartment 412. Optionally, the perimeter rib 446 includes a plurality of holes 447 and the frame 433 includes a plurality of corresponding pins 449 aligned with and inserted into the holes 447. This optional feature further helps to retain and stabilize the platform 432. The support structure 430 thus operates to suspend the platform 432 above the reservoir 418. In this way, the platform 432 provides openings 435 configured to direct liquid exuded from the comestible mollusk material 16 into the reservoir 418. Optionally (not shown), the platform 432 further includes a liquid permeable cover (such as 50), e.g., disposed atop the mesh material 431. As shown, an absorbent material 20 is provided in the reservoir 418.

Figs. 6A and 6B show another storage container 510, which is optionally formed from a thermoformed polymer tray (although other materials may be used). The tray is round, however it should be understood that the tray may be provided in alternative shapes, e.g., rectangular or oval, for example. As with the other storage containers disclosed herein, the storage container 510 includes a support structure 530 in the internal compartment 512. The support structure 530 includes a central pillar 560 from which a plurality of evenly spaced support beams 562 extend radially to the sidewall 524. The upper end 534 of the support structure 530 forms a portion of the platform 532. Preferably, the platform 532 also includes a cover 550, optionally made from a filter or membrane, e.g., comprising a non-woven material. The cover 550 in this embodiment thus provides a liquid permeable surface, which is configured to direct liquid exuded from the comestible mollusk material 16 into the reservoir 518. As shown, an absorbent material 20 is provided in the reservoir 518.

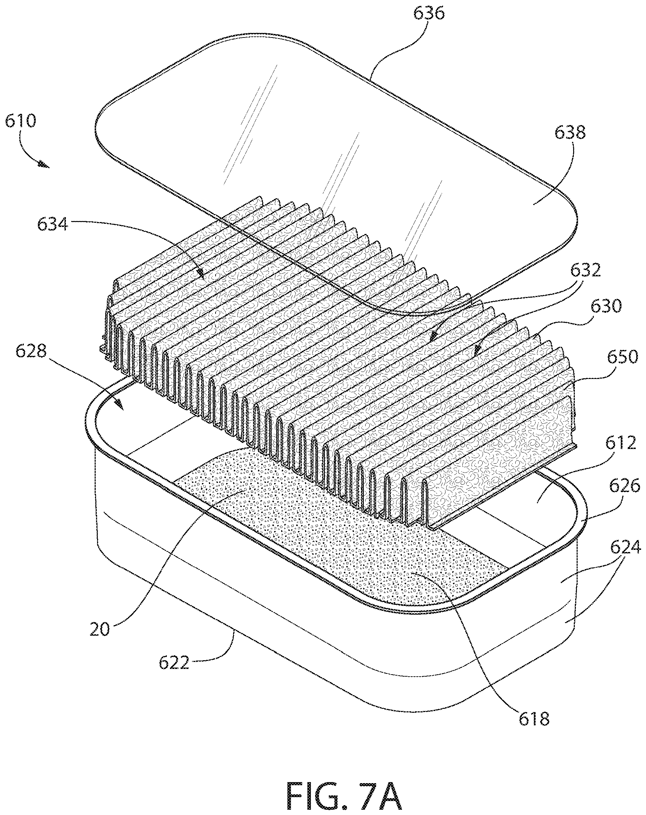

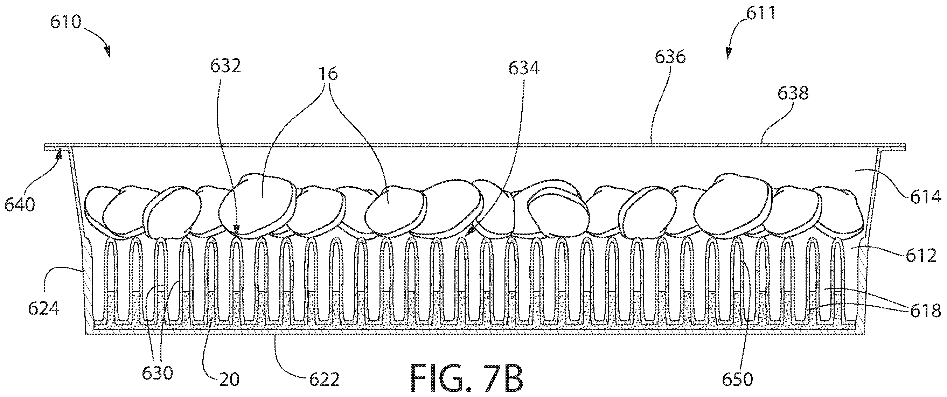

Figs. 7A and 7B show another storage container 610, which is optionally formed from a thermoformed polymer tray (although other materials may be used). As with the other storage containers disclosed herein, the storage container 610 includes a support structure 630 in the internal compartment 612. The support structure 630 comprises a corrugated rigid cover 650. The cover 650 may be made from, for example, a non-woven material that is liquid permeable and rigid. The rigidity of the material may be provided using a stiffening finish. Alternatively (or in addition), the rigidity of the material may be provided by increasing its thickness and molding or pleating it into the corrugated shape. Uniquely, in this storage container, the cover 650 itself serves as support structure 630 and itself provides the upper end 634 of the support structure 630, forming the platform 632. It should be understood that the support structure may be provided in shapes and configurations other than corrugated, so long as the support structure is sufficiently rigid to function simultaneously as a cover and a platform. The cover 650 and platform 632 thus provides a liquid permeable surface, which is configured to direct liquid exuded from the comestible mollusk material 16 into the reservoir 518. Preferably, a bed of absorbent material 20 is provided in the reservoir 618. Optionally, some of the absorbent material 20 is disposed within the "hills" of the corrugated cover 650.

Alternatively (not shown), a storage container is provided which includes a plurality of individual product containing spaces for storing comestible mollusk material. Aside from the fact that this alternative storage container is divided into separate product containing spaces, any of the features discussed herein may be utilized in this alternative storage container. Each individual product containing space may include a lidding film enclosing the mollusk material in the given space. In this way, if a lidding film is removed from one product containing space, the other compartments remain sealed so that the unused comestible mollusk material stored in them may be put away again for refrigerated storage, for example.

### Optional Liquid Permeable Cover Material

As discussed above with respect to a liquid permeable cover 50, 150, 550, 650, the cover (and platform of which it is a part of or which it forms) provides a liquid permeable surface. Such surface is configured to direct liquid exuded from the comestible mollusk material into the reservoir. The cover may be made from any liquid permeable material that has sufficient durability to withstand wet conditions for at least a couple weeks.

Optionally, in any embodiment, the cover comprises a spunbond synthetic nonwoven material. If a spunbond synthetic nonwoven material is used for the cover, a preferred brand is the AHLSTROM WL257680. Preferably, the material is food contact safe and is compliant with U.S. Federal Food and Drug Administration regulations 21 C.F.R. §§ 177.1630 and 177.1520.

Optionally, in any embodiment, the cover material facilitates unidirectional movement of liquid therethrough, such that the liquid permeates downward from the product containing space into the reservoir, but not vice versa. In other words, the cover material is optionally a one way material. Optionally, such one way material may include TREDEGAR brand plastic films.

Optionally, in any embodiment, the cover is from 50 microns to 500 microns thick, optionally, 250 microns (48 GSM) or 130 microns (20 GSM).

Optionally, in any embodiment, the cover has a porosity of from 200 L/min/m² to 2,000 L/min/m², optionally 620 L/min/m².

Optionally, where the cover lays atop a support structure (e.g., ribs, 46, 48), the cover (e.g., 50) is heat sealed to the upper end (e.g., 34) thereof.

Optionally, cover materials other than nonwovens may include a scrim, for example.

In some embodiments, it may be desirable to make the cover stiff. In the case of nonwovens, this may be done using a stiffening finish. Alternatively (or in addition), the rigidity of the material may be provided by increasing its thickness and molding or pleating it into a desired shape. The final material would be rigid or semi rigid. For example, the nonwoven material may be configured to have a mass per unit area of 20 g/m² to 100 g/m². Optionally, such material is molded or pleated. Alternatively, such material may be fabricated on a mat that produces the desired shape when a vacuum is applied or forced air is provided through the mat.

Optionally, in any embodiment, the cover has antimicrobial properties. This may be achieved by treating the nonwoven with an antimicrobial finish, comprising, e.g., silver ions or nanoparticles of chlorine dioxide, for example. Alternatively, the antimicrobial elements can be engrained in the material of the nonwoven itself.

### Absorbent Material Composition

An absorbent material 20 is provided within the reservoir 18, 118, 218, 318, 418, 518, 618. As discussed below, the absorbent material 20 may be a composition of matter (e.g., powder mixture) or a single article (e.g., sponge), for example.

Absorbent materials usable in conjunction with the present invention include food safe absorbent materials having an absorbent composition of matter suitable for use with food products. The absorbent composition of matter has an absorbency, the absorbency being defined by weight of liquid absorbed/weight of the absorbent composition of matter.

The absorbent material is not particularly limited to any material class. However, the absorbent material needs to be food safe, possesses a desirable absorbency, and exhibits a minimum syneresis. For example, the absorbent material may include one or more of the following: tissue paper, cotton, sponge, fluff pulp, polysaccharide, polyacrylate, psyllium fiber, guar gum, locust bean gum, gellan gum, alginic acid, xyloglucan, pectin, chitosan, poly(DL-lactic acid), poly(DL-lactide-co-glycolide), poly-caprolactone, polyacrylamide copolymer, ethylene maleic anhydride copolymer, cross-linked carboxymethylcellulose, polyvinyl alcohol copolymers, cross-linked polyethylene oxide, starch grafted copolymer of polyacrylonitrile, and a cross-linked or non-cross-linked gel-forming polymer.

In a preferred embodiment, the absorbent material comprises a cross-linked or a non-cross-linked gel-forming polymer. Such gel-forming polymer may be water soluble or insoluble. In another preferred embodiment, the absorbent material further comprises at least one of the following: 1) at least one mineral composition, 2) at least one soluble salt having at least one trivalent cation, and 3) an inorganic buffer.

In an embodiment, the absorbent material includes at least one non-crosslinked gel-forming water soluble polymer having a first absorbency, the first absorbency being defined by weight of liquid absorbed/weight of the at least one non-crosslinked gel forming polymer, the at least one non-crosslinked gel forming polymer being food safe, the absorbent composition of matter being compatible with food products such that the absorbent composition of matter is food safe when in direct contact with the food products.

In an embodiment, the absorbent material includes the following: (i) at least one non-crosslinked gel-forming water soluble polymer having a first absorbency, the first absorbency being defined by weight of liquid absorbed/weight of the at least one non-crosslinked gel forming polymer, the at least one non-crosslinked gel forming polymer being food safe; and (ii) at least one mineral composition having a second absorbency, the second absorbency being defined by weight of liquid absorbed/weight of the at least one mineral composition, the at least one mineral composition being food safe, the absorbency of the absorbent material exceeding the first absorbency and the second absorbency, the absorbent material being compatible with food products such that the absorbent composition of matter is food safe when in direct contact with the food products.

In an embodiment, the absorbent material includes the following: (i) at least one non-crosslinked gel-forming water soluble polymer having a first absorbency, the first absorbency being defined by weight of liquid absorbed/weight of the at least one non-crosslinked gel forming polymer, the at least one non-crosslinked gel forming polymer being food safe; and (ii) at least one soluble salt having at least one trivalent cation, the at least one soluble salt having at least one trivalent cation being food safe, the absorbency of the absorbent material exceeding the first absorbency and the second absorbency, the absorbent material being compatible with food products such that the absorbent composition of matter is food safe when in direct contact with the food products.

In an embodiment, the absorbent material includes the following: (i) at least one non-crosslinked gel-forming water soluble polymer having a first absorbency, the first absorbency being defined by weight of liquid absorbed/weight of the at least one non-crosslinked gel forming polymer, the at least one non-crosslinked gel forming polymer being food safe; (ii) at least one mineral composition having a second absorbency, the second absorbency being defined by weight of liquid absorbed/weight of the at least one mineral composition, the at least one mineral composition being food safe; and (iii) at least one soluble salt having at least one trivalent cation, the at least one soluble salt having at least one trivalent cation being food safe, the absorbency of the absorbent composition of matter exceeding a sum of the first absorbency and the second absorbency, the absorbent material being compatible with food products such that the absorbent composition of matter is food safe when in direct contact with the food products.

Any of the embodiments of the absorbent composition of matter described above may optionally comprise an inorganic or organic buffer.

Optionally, the absorbent material contains from about 10 to 90% by weight, preferably from about 50 to about 80% by weight, and most preferably from about 70 to 75% by weight polymer. The non-crosslinked gel forming polymer can be a cellulose derivative such as carboxymethylcellulose (CMC) and salts thereof, hydroxyethylcellulose, methylcellulose, hydroxypropylmethylcellulose, gelatinized starches, gelatin, dextrose, and other similar components, and may be a mixture of the above. Certain types and grades of CMC are approved for use with food items and are preferred when the absorbent is to be so used. The preferred polymer is a CMC, most preferably sodium salt of CMC having a degree of substitution of about 0.7 to 0.9. The degree of substitution refers to the proportion of hydroxyl groups in the cellulose molecule that have their hydrogen substituted by a carboxymethyl group. The viscosity of a 1% solution of CMC at 25° C, read on a Brookfield viscometer, should be in the range of about 2500 to 12,000 mPa. The CMC used in the Examples following was obtained from Hercules, Inc. of Wilmington, Del. (under the trade name B315) or from AKZO Nobel of Stratford, Conn. (under the trade name AF3085).

The mineral composition may be clay. The clay can be any of a variety of materials and is preferably attapulgite, montmorillonite (including bentonite clays such as hectorite), sericite, kaolin, diatomaceous earth, silica, and other similar materials, and mixtures thereof. Preferably, bentonite is used. Bentonite is a type of montmorillonite and is principally a colloidal hydrated aluminum silicate and contains varying quantities of iron, alkali, and alkaline earths. The preferred type of bentonite is hectorite which is mined from specific areas, principally in Nevada. Bentonite used in the Examples following was obtained from American Colloid Company of Arlington Heights, Ill. under the tradename BENTONITE AE-H.

Diatomaceous earth is formed from the fossilized remains of diatoms, which are structured somewhat like honeycomb or sponge. Diatomaceous earth absorbs fluids without swelling by accumulating the fluids in the interstices of the structure. Diatomaceous earth was obtained from American Colloid Company.

The clay and diatomaceous earth are present in an amount from about 10-90% by weight, preferably about 20-30% by weight, however, some applications, such as when the absorbent material is to be used to absorb solutions having a high alkalinity, i.e. marinades for poultry, can incorporate up to about 50% diatomaceous earth. The diatomaceous earth can replace nearly all of the clay, with up to about 2% by weight remaining clay.

The trivalent cation is preferably provided in a soluble salt such as derived from aluminum sulfate, potassium aluminum sulfate, and other soluble salts of metal ions such as aluminum, chromium. Preferably, the trivalent cation is present at about 1 to 20%, most preferably at about 1 to 8%.

The inorganic buffer is one such as sodium carbonate (soda ash), sodium hexametaphosphate, sodium tripolyphosphate, and other similar materials. The organic buffer may be citric acid, monopotassium phosphate, or buffer mixture with a set pH range. If a buffer is used, it is present preferably at about 0.6%, however beneficial results have been achieved with amounts up to about 15% by weight.

The mixture of the non-crosslinked gel forming polymer, trivalent cation, and clay forms an absorbent material which when hydrated has an improved gel strength over the non-crosslinked gel forming polymer alone. Further, the gel exhibits minimal syneresis, which is exudation of the liquid component of a gel.

In addition, the combined ingredients form an absorbent material which has an absorbent capacity which exceeds the total absorbent capacity of the ingredients individually. While not limited by this theory, it appears that the trivalent cation provides a cross-linking effect on the CMC once in solution, and that the clay swells to absorb and stabilize the gels. Further, as shown by Example D of Table 1 below, it appears that, in some cases at least, it is not necessary to add trivalent cation. It is thought that perhaps a sufficient amount of trivalent cation is present in the bentonite and diatomaceous earth to provide the crosslinking effect.

The gels formed by the absorbent material used in the present invention are glass clear, firm gels. Some embodiments of the absorbent material are set forth in Table 1. As used in Table 1, absorption is defined as the increased weight achieved in an absorbent pad, following placement of such pad in a tray-type container with 0.2% saline therein in such quantities as to not limit the access of fluid to the pad for up to 72-96 hours until no further increase of weight is apparent. The net absorption is the difference between the final weight of the pad and the dry starting weight, after deducting the net absorbency of the base pad material other than the absorbent blend i.e. the fabric component. This is converted to a gram/gram number by dividing the net absorption by the total weight of absorbent blend incorporated in the pad. Such a procedure is accurate for comparative purposes when the pad structure used is the same for all the tested blends.

**TABLE 1**

| EXAMPLES OF PREFERRED EMBODIMENTS | | | | | | |
|---|---|---|---|---|---|---|
| | | | Absorbency-gm/gm | | | |
| | Ingredient | weight % | Individual Ingredient | Expected from Summation | Actual | Actual/ Expected |
| A | CMC-B315 | 71.3 | 35 | 26.59 | 43.12 | 162.17% |
| | Potassium Aluminum Sulfate | 6.19 | 0 | | | |
| | Bentonite (i.e., Hectorite) | 22.5 | 7 | | | |
| B | CMC-AF3085 | 71.2 | 35 | 27.5 | 53.94 | 196.15% |
| | Potassium Aluminum Sulfate | 6.32 | 0 | | | |
| | Diatomaceous Earth | 20.2 | 12 | | | |
| | Bentonite | 2.25 | 7 | | | |
| C | CMC-AF3085 | 74.4 | 35 | 28.75 | 65.37 | 227.37% |
| | Potassium Aluminum Sulfate | 1.47 | 0 | | | |
| | Diatomaceous Earth | 21.2 | 12 | | | |
| | Bentonite | 2.35 | 7 | | | |
| | Soda Ash (sodium carbonate) | 0.58 | 0 | | | |
| D | CMC-AF3085 | 70 | 35 | 26.12 | 56.74 | 217.23% |
| | Diatomaceous Earth | 27 | 12 | | | |
| | Bentonite | 3 | 7 | | | |
| E | granulated CMC-AF3085 | 70.7 | 35 | 26.37 | 49.17 | 186.46% |
| | Potassium Aluminum Sulfate | 6.14 | 0 | | | |
| | Bentonite | 23.2 | 7 | | | |
| F | CMC-AF3085 | 70.8 | 35 | | | |
| | Potassium Aluminum Sulfate | 6.89 | 0 | 27.3.5 | 51.79 | 189.36% |
| | Bentonite | 2.23 | 7 | | | |
| | Diatomaceous Earth | 20.1 | 12 | | | |
| G | CMC-AF3085 | 54.0 | 35 | 24.67 | 48.97 | 198.5% |
| | Bentonite | 40.0 | 7 | | | |
| | Alginate | 5.94 | 50 | | | |
| | Calcium Chloride | 0.06 | a | | | |
| H | CMC-AF3085 | 75.3 | 35 | 27.98 | 62.51 | 223.4% |
| | Bentonite | 2.3.2 | 7 | | | |
| | Potassium Aluminum Sulfate | 1.5 | 0 | | | |
| I | CMC-AF3085 | 73.5 | 35 | 27.35 | 64.42 | 235.5% |
| | Bentonite | 23.2 | 7 | | | |
| | Potassium Aluminum Sulfate | 3.3 | 0 | | | |
| J | CMC-B315 | 31.82 | 35 | 18.46 | 32.85 | 177.9% |
| | Diatomaceous Earth | 54.96 | 12 | | | |
| | Bentonite | 10.44 | 7 | | | |
| | Potassium Aluminum Sulfate | 2.78 | 0 | | | |

It is apparent from Table 1 that a significant synergistic effect has been achieved in the absorption behavior of these blends, resulting in dramatic improvement in absorption capacity of the blends compared to the individual components. As the non-CMC ingredients are of much lower cost than CMC itself, the blends achieve major reductions in cost per unit weight of absorption.

In the Examples described below, the absorbent material comprises by weight 80-90% carboxymethylcellulose, 5-10% bentonite, 1-5% potassium aluminum sulfate, and 0-10% citric acid. In an embodiment, the absorbent material comprises by weight about 87% carboxymethylcellulose, about 10% bentonite, and about 3% potassium aluminum sulfate. In another embodiment, the absorbent material comprises by weight about 80% carboxymethylcellulose, about 8% bentonite, about 3% potassium aluminum sulfate, and about 9% citric acid.

The ingredients for the composition are optionally mixed together and then formed into granules. It has been found that preferred embodiments of the absorbent material may be agglomerated by processing without addition of chemicals in a compactor or disk type granulator or similar device to produce granules of uniform and controllable particle size. Granules so formed act as an absorbent with increased rate and capacity of absorption due to the increased surface area of the absorbent. The preferred granule size is from about 75 to 1,000 microns, more preferably from about 150 to 800 microns, and most preferably from about 250 to 600 microns, with the optimum size depending upon the application. Water or another binding agent may be applied to the blend while it is being agitated in the compactor or disk type granulator which may improve the uniformity of particle size. Further, this method is a way in which other ingredients can be included in the composition, such as surfactants, deodorants and antimicrobial agents.

Optionally, one or more odor absorbers may be included in the absorbent material. Examples of such odor absorbers include: zinc chloride optionally in an amount of from greater than 0.0 to 20.0% by weight, zinc oxide optionally in an amount of from greater than 0.0 to 20.0% by weight and citric acid optionally in an amount of from greater than 0.0 to 50.0% by weight. Where the absorbent material comprises from 30% to 80% non-crosslinked gel-forming polymer, optionally carboxymethylcellulose, the amount of the absorbent material is adjusted according to the amount of odor absorber included in the absorbent material.

Optionally, at least one antimicrobial agent is included or blended with the absorbent material. For example, the at least one antimicrobial agent includes compositions described in U.S. Pat. No. 7,863,350. The term "antimicrobial agent" is defined herein as any compound that inhibits or prevents the growth of microbes within the storage container. The term "microbe" is defined herein as a bacterium, fungus, or virus. The antimicrobial agents useful herein include volatile antimicrobial agents and non-volatile antimicrobial agents. Combinations of the volatile and non-volatile antimicrobial agents are also contemplated.

The term "volatile antimicrobial agent" includes any compound that when it comes into contact with a fluid (e.g., liquid exuded from a food product), produces a vapor of antimicrobial agent. In one aspect, the volatile antimicrobial agent is from 0.25 to 20%, 0.25 to 10%, or 0.25 to 5% by weight of the absorbent material. Examples of volatile antimicrobial agents include origanum, basil, cinnamaldehyde, chlorine dioxide, vanillin, cilantro oil, clove oil, horseradish oil, mint oil, rosemary, sage, thyme, wasabi or an extract thereof, a bamboo extract, an extract from grapefruit seed, an extract of Rheum palmatum, an extract of coptis chinesis, lavender oil, lemon oil, eucalyptus oil, peppermint oil, cananga odorata, cupressus sempervirens, curcuma longa, cymbopogon citratus, eucalyptus globulus, pinus radiate, piper crassinervium, psidium guayava, rosmarinus officinalis, zingiber officinale, thyme, thymol, allyl isothiocyanate (AIT), hinokitiol, carvacrol, eugenol, α-terpinol, sesame oil, or any combination thereof.

Depending upon the application, the volatile antimicrobial agent can be used alone or in combination with solvents or other components. In general, the release of the volatile antimicrobial agent can be varied by the presence of these solvents or components. For example, one or more food safe solvents such as ethanol or sulfur dioxide can be mixed with the volatile antimicrobial agent prior to admixing with the absorbent composition. Alternatively, the volatile antimicrobial agent can be coated with one or more water-soluble materials. Examples of such water-soluble material include cyclodextrin, maltodextrin, corn syrup solid, gum arabic, starch, or any combination thereof. The materials and techniques disclosed in U.S. Published Application No. 2006/0188464 can be used herein to produce the coated volatile antimicrobial agents.

In other aspects, non-volatile antimicrobial agents may be used in combination with or as an alternative to volatile antimicrobial agents. The term "non-volatile antimicrobial agent" includes any compound that when it comes into contact with a fluid (e.g., liquid exuded from a food product), produces minimal to no vapor of antimicrobial agent. In one aspect, the volatile antimicrobial agent is from 0.5 to 15%, 0.5 to 8%, or 0.5 to 5% by weight of the food preservation composition. Examples of non-volatile antimicrobial agents include ascorbic acid, a sorbate salt, sorbic acid, citric acid, a citrate salt, lactic acid, a lactate salt, benzoic acid, a benzoate salt, a bicarbonate salt, a chelating compound, an alum salt, nisin, or any combination thereof. The salts include the sodium, potassium, calcium, or magnesium salts of any of the compounds listed above. Specific examples include calcium sorbate, calcium ascorbate, potassium bisulfite, potassium metabisulfite, potassium sorbate, or sodium sorbate.

### Optional Use of Antimicrobial Gas Releasing Agents

Optionally, in any embodiment of the invention, methods and articles for inhibiting or preventing the growth of microbes and/or for killing microbes in a closed package may be utilized. Such methods and articles are described in PCT/US2017/061389.

For example, an entrained polymer film material made from a monolithic material comprising a base polymer (e.g., a thermoplastic polymer, such as a polyolefin), a channeling agent (e.g., polyethylene glycol) and an antimicrobial gas releasing agent, may be provided within the storage container. Preferably, the film is secured to the sidewall above a midpoint or is secured (or part of) the underside of the lid.

Optionally, an antimicrobial releasing agent is disposed within the internal compartment, the antimicrobial releasing agent releasing chlorine dioxide gas into the product containing space by reaction of moisture with the antimicrobial releasing agent. The antimicrobial releasing agent is optionally provided in an amount that releases the chlorine dioxide gas to provide a headspace concentration of from 10 parts per million (PPM) to 35 PPM for a period of 16 hours to 36 hours, optionally from 15 PPM to 30 PPM for a period of 16 hours to 36 hours, optionally from 15 PPM to 30 PPM for a period of about 24 hours. Optionally, the antimicrobial releasing agent is a powdered mixture comprising an alkaline metal chlorite, preferably sodium chlorite. Optionally, the powdered mixture further comprises at least one catalyst, optionally sulfuric acid clay, and at least one humidity trigger, optionally calcium chloride.

As used herein, the term "channeling agent" or "channeling agents" is defined as a material that is immiscible with the base polymer and has an affinity to transport a gas phase substance at a faster rate than the base polymer. Optionally, a channeling agent is capable of forming channels through the entrained polymer when formed by mixing the channeling agent with the base polymer. Channeling agents form channels between the surface of the entrained polymer and its interior to transmit moisture into the film to trigger the antimicrobial gas releasing agent and then to allow for such gas to emit into the storage container.

### Use and Achievements of the Disclosed Methods

It has been found that packaging methods according to the present invention provide a surprisingly long shelf life to the stored fresh mollusks. For example, as explained below, the Applicant has confirmed that after at least 15 days of refrigerated storage according to the present invention, fresh scallops were as fresh and delicious as if they had been caught the same day. Applicant's data demonstrates that the inventive methods and packages can successfully store and preserve fresh mollusks for at least 9 days, optionally at least 12 days, optionally from 12 to 21 days.

The term "shelf life" as used herein with reference to fresh comestible mollusk material is the length of time (measured in days) that the mollusk material may be stored (from the time it is caught) in above freezing conditions without becoming unfit for consumption. Optionally, in any embodiment, fresh comestible mollusk material may be previously frozen. Shelf life may be measured according to common metrics in the seafood industry, such as through basic sensory perception including appearance, smell and taste of the seafood.

This sensory perception may optionally be evaluated according to the hedonic scale. The hedonic scale measures the perception of human test subjects who observe the quality of a given item (using sight or smell) and who indicate the extent of their like or dislike for the item. The hedonic scale used in the present disclosure is a five point scale. This scale includes the following characterizations of the odor perception as well as visual perception:

| | |
|---|---|
| **5** | Like Very Much |
| **4** | Like |
| **3** | Neither Like Nor Dislike |
| **2** | Dislike |
| **1** | Dislike Very Much |

The examples below, in which hedonic test results are presented, used ten human test subjects on average per test. For each such test, tabulated results for the test subjects were averaged to provide the data presented herein.

In the case of mollusks that are intended to be packaged and transported while alive (e.g., oysters), the proportion of such mollusks that remain alive after a certain amount of time is a metric or endpoint indicative of shelf life. In addition or alternatively, shelf life may be measured according to propagation of undesirable levels of microorganisms, such as bacteria or yeast and mold, as measured using conventional techniques.

In examples of product storage described herein, refrigerated conditions were used. Unless explicitly stated otherwise for a given example, the term "refrigerated conditions" refers to storage in an environment that is 4°C at normal atmospheric pressure.

Aerobic Plate Count (APC) or Standard Plate Count (SPC) determines the overall microbial population in a sample. The standard test method is an agar pour plate using Plate Count Agar for determination of the total aerobic microorganisms that will grow from a given sample. The test takes at least two days after which results are given in CFU/g or ml (colony forming units per gram or per milliliter). 3M PETRIFILM^{™} can also be used to obtain APC or SPCs. APC may also be referred to as Total Plate Count (TPC).

### EXAMPLES

The invention will be illustrated in more detail with reference to the following Examples.

The absorbent material in the Examples below comprised by weight about 87% carboxymethylcellulose, about 10% bentonite, and about 3% potassium aluminum sulfate.

### Example 1 - Scallop Packaging Trial (Color and Smell)

On day 0, 6 ten pound trays of fresh 10/20 shucked scallops were received in the morning in an overnight shipment from a fishery. The scallops were stored in a Styrofoam cooler with flake ice or cold gel packs during shipment. Five pounds of scallops were taken out of each ten-pound tray and stored in 6 storage containers (each approximately 12.5" x 10.5" x 2") generally similar to that shown in Fig. 1, with a lidding film sealed thereon to enclose the scallops. The sealed containers were placed into a cooler at 4° C. The remaining scallops were left in the plastic control tray (15.7" x 11.5" x 2.7") with a snap on plastic lid also stored in refrigerated conditions.

On day 6, scallops from 3 sealed storage containers and the 3 corresponding control trays were sampled. No noticeable off odors were noted, however scallops from the control trays did have a slightly yellow color compared to those from the sealed storage container. Three scallops from each of the three control trays and three sealed containers were sampled for aerobic bacteria and yeast and mold (the counts of which are described below in subsequent examples).

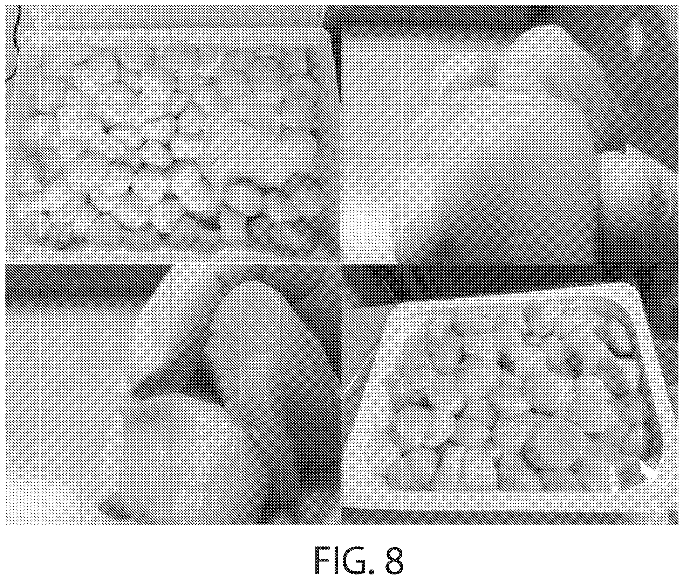

On day 13, samples from the respective trays and containers were again taken. This time, the control trays emitted bad seafood smell with hints of ammonia. The samples from the control trays presented as yellow/orange, suggesting that they were covered in a yellow-orange yeast. By contrast, the scallop samples from the sealed containers still had an appetizing smell and were white in appearance. Fig. 8 shows four photographs illustrating the visual difference between the samples. Top-left shows the yellowish appearance of scallops in the control tray. Bottom-right shows the white and fresh appearance of scallops in the sealed container. Top-right and bottom-left show side-by-side views of the two different samples, wherein the fresh and white scallop is positioned to the left of the yellow looking scallop from the control tray, which is positioned to the right. The original photographs are in color. The coloration may not be easily discernible since the photographs are presented in black and white (due to patent filing constraints). Nevertheless, in the two side-by-side photographs the scallops stored in the sealed container clearly present a lighter color across the entire exterior in view compared to those stored in the control tray.

### Example 2 - Scallop Packaging Trial (Bacteria Count)

Data from samples described in Example 1 were recorded, measuring bacteria, denoted in units of colony forming units per gram, or CFU/g. The following table shows the data, wherein "MCT Tray" refers to the sealed storage container described in Example 1.

**Table 2**

| | **COUNTS** | | **LOG** | |
|---|---|---|---|---|
| **Aerobic Bacteria count** | **CONTRO L** | **MCT TRAY** | **CONTROL** | **MCT TRAY** |
| Day 0 | 72.45 | 72.45 | 1.86003839 | 1.86003839 |
| Day 6 | 468 | 68 | 2.670245853 | 1.832508913 |
| Day 13 | 167500 | 400 | 5.224014811 | 2.602059991 |

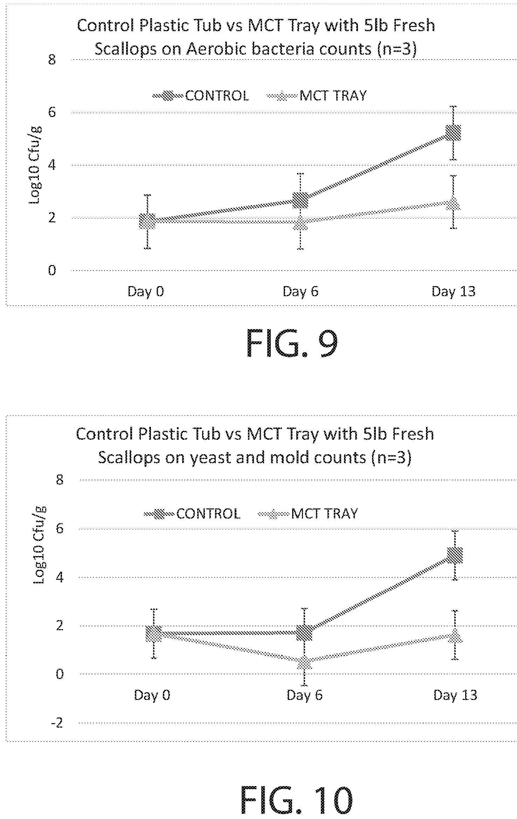

As shown in the above table and in the corresponding graph provided in Fig. 9, the MCT Tray surprisingly achieved over a 2.5 log CFU/g reduction in bacteria compared to the control at day 13 of storage.

### Example 3 - Scallop Packaging Trial (Yeast and Mold Count)

Data from samples described in Example 1 were recorded, measuring yeast and mold. The following table shows the data.

**Table 3**

| | **COUNTS** | | **LOG** | |
|---|---|---|---|---|
| **Yeast and mold count** | **CONTROL** | **MCT TRAY** | **CONTROL** | **MCT TRAY** |
| Day 0 | 47.15 | 47.15 | 1.673481697 | 1.673481697 |
| Day 6 | 51 | 3.5 | 1.707570176 | 0.544068044 |
| Day 13 | 81350 | 42 | 4.910357557 | 1.62324929 |

As shown in the above table and in the corresponding graph provided in Fig. 10, the MCT tray surprisingly achieved over a 3.0 log CFU/g reduction in yeast and mold compared to the control.

### Example 4 - Yeast and Mold Reduction in Scallops Compared to Tomatoes

A study compared mold and yeast proliferation in different storage containers for tomatoes, which were stored for 14 days in refrigerated conditions. The control trays are labeled as "RBT" and trays substantially similar to the sealed storage containers of Examples 1-3 are identified as "MCT". The results in log CFU/g are provided in the table below.

**Table 4**

| Yeast & Mold | | |
|---|---|---|
| | MCT | RBT |
| Day 0 | 0.97 | 0.97 |
| Day 5 | 1.21 | 0.96 |
| Day 10 | 3.00 | 1.77 |
| Day 14 | 4.62 | 5.40 |

According to the above chart, at day 14, the container provided under a 1.0 log CFU/g reduction in yeast and mold compared to the control. By contrast, essentially the same experiment (albeit, after 13 days instead of 14), per Example 3, demonstrated that the scallops on day 13 achieved over a 3.0 log CFU/g reduction in yeast and mold compared to the control. It is indeed unexpected that such a difference occurred essentially only due to the contents of the storage container. In other words, storage of fresh produce did not show a significant difference in log reduction of yeast/mold between the inventive container and the control, whereas storage of fresh mollusks in fact demonstrated a very significant difference in the same metric. It is true that these products differ in physiology and therefore some modicum of difference in log reduction of yeast and mold after about two weeks of storage may be expected. Tomatoes are a fruit and as such respire and generate different gases and substances compared to scallops. On the other hand, scallops are dead muscle tissue and do not have the same respiration requirements or outputs. However, these physiological differences do not explain or suggest to a skilled artisan the significant step-wise change in log CFU/g reduction, as demonstrated here between the tomatoes and scallops. Accordingly, the method the present invention has been demonstrated to have achieved unexpected results.

### Example 5 - Scallops Taste and Odor Testing

Applicant invited a group of customers in the seafood business for a discussion and a meal. The meal included fresh scallops that had been stored under refrigerated conditions in a sealed storage container according to that described above in Example 1. The scallops had been stored for a period of 15 days and looked, smelled and tasted fresh. These customers included people who were second or third generation seafood business persons and were experts in quality standards for seafood products. Prior to and during the meal, the customers were unaware that the fresh scallops were, in fact, 15 days old. At the conclusion of the meal, the customers were informed of the fact that they had eaten 15 day old fresh scallops. Initially this news was met with shock and surprise, but ultimately these customers were amazed that the scallops were so old yet still perfectly fresh. Given that fresh scallops do not typically last more than 6 days in conventional packaging, these industry experts were extremely surprised that the scallops they ate were perfectly fine after 15 days, when stored according to the present invention. Moreover, these experts pointed out that the scallops may have actually been older than 15 days because boats sometimes remain at sea after catching the seafood for some time before delivering the haul to port.

### Example 6 - Percent Dead and Perception Score of Live Littleneck Clams

On day 0, live littleneck clams were received in mesh bags in five or ten pound increments from a fishery. The clams were stored in a Styrofoam cooler with flake ice or gel packs during shipment. Five pounds of clams were taken out and stored in a storage container (approximately 12.5" x 10.5" x 2") generally similar to that shown in Fig. 1, with a lidding film sealed thereon to enclose the clams. The sealed container was placed into a cooler at 4° C. An equal amount of clams in the mesh bags was also stored in refrigerated conditions. Mesh bags are the industry standard for storage of live clams.

On each of days 3, 6, 9 and 13, the clams from three sealed storage containers and the corresponding control packages (mesh bags) were sampled. The percentage of dead clams on a given day is recorded in Table 5 (n =3, i.e., results are obtained from 3 containers).

**Table 5.**

| **Day** | **CONTROL** | **MCT TRAY** |
|---|---|---|
| 3 | 0% | 0% |
| 6 | 7% | 1% |
| 9 | 4% | 3% |
| 13 | 25% | 15% |

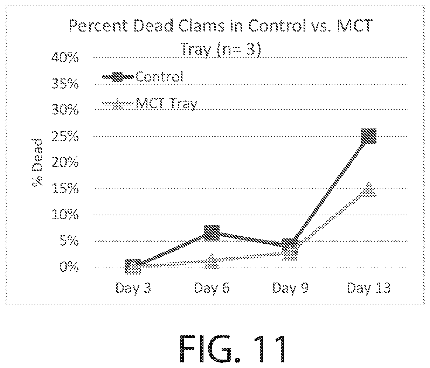

The percentage of dead clams is plotted in Fig. 11 for the clams stored by the two different methods. The percentage of dead clams stored in the mesh bags is significantly higher than those stored in a container that is a preferred embodiment of the present invention.

On days 3, 6, 9 and 13, the clams from one sealed storage container and the corresponding mesh bags were sampled. The sensory perception in appearance and odor was each evaluated on the hedonic scale.

**Table 6. Sensory - Appearance**

| **Day** | **CONTROL** | **MCT TRAY** |
|---|---|---|
| 3 | 5.0 | 5.0 |
| 6 | 5.0 | 5.0 |
| 9 | 5.0 | 5.0 |
| 13 | 4.0 | 4.0 |

**Table 7. Sensory - Odor**

| **Day** | **CONTROL** | **MCT TRAY** |
|---|---|---|
| 3 | 5.0 | 5.0 |
| 6 | 5.0 | 5.0 |
| 9 | 5.0 | 5.0 |
| 13 | 3.0 | 4.0 |

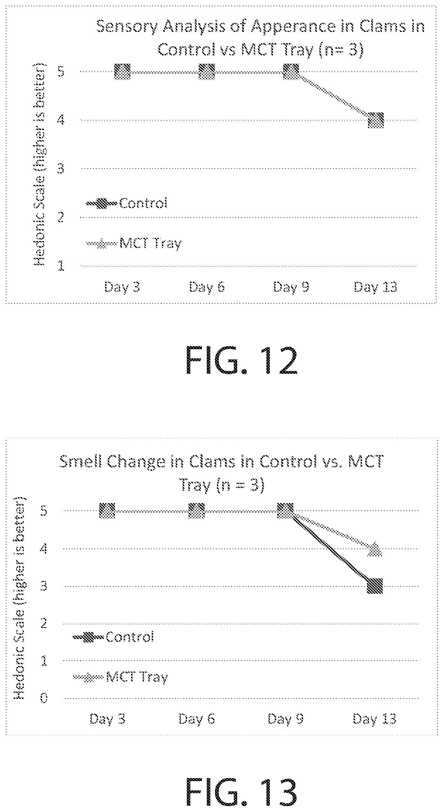

The results are plotted in Figs. 12 and 13, respectively. No noticeable difference in appearance was observed between the two populations stored by the two methods throughout the observation period. However, the clams stored in the sealed container presented a fresher smell than those in the mesh bags on day 13.

### Example 7 - Bacteria Count in Raw Shucked Clam Strips

On day 0, raw shucked clam strips were received in the morning in an overnight shipment from a fishery. The clam strips were stored in a Styrofoam cooler with flake ice or cold gel packs during shipment. One pound of the raw claim strips were taken out and stored in a storage container (each approximately 12.5" x 10.5" x 2") generally similar to that shown in Fig. 1, with a lidding film sealed thereon to enclose the raw clam strips. The sealed containers were placed into a cooler at 4° C. About 9 pounds of the raw clam strips was placed in a plastic control tray (15.7" x 11.5" x 2.7") with a snap on plastic lid also stored in refrigerated conditions.

On days 6, 11 and 18, the raw clam strips from a sealed storage container and the corresponding control tray were sampled. The APCs measuring bacteria are as shown in Table 8 below (n=3, each about 25 g of clams).

**Table 8**

| | **COUNTS** | | **LOG** | | |
|---|---|---|---|---|---|
| **Aerobic Bacteria count** | **CONTRO L** | **MCT TRAY** | **CONTROL** | **MCT TRAY** | **Std Dev** |
| Day 0 | 277 | 277 | 2.44 | 2.44 | 0 |
| Day 6 | 4,285 | 8,365 | 3.63 | 3.92 | 0.21 |
| Day 11 | 157,940 | 61,145 | 5.20 | 4.79 | 0.29 |
| Day 18 | 166,410 | 5,531 | 5.22 | 3.74 | 0.5 |

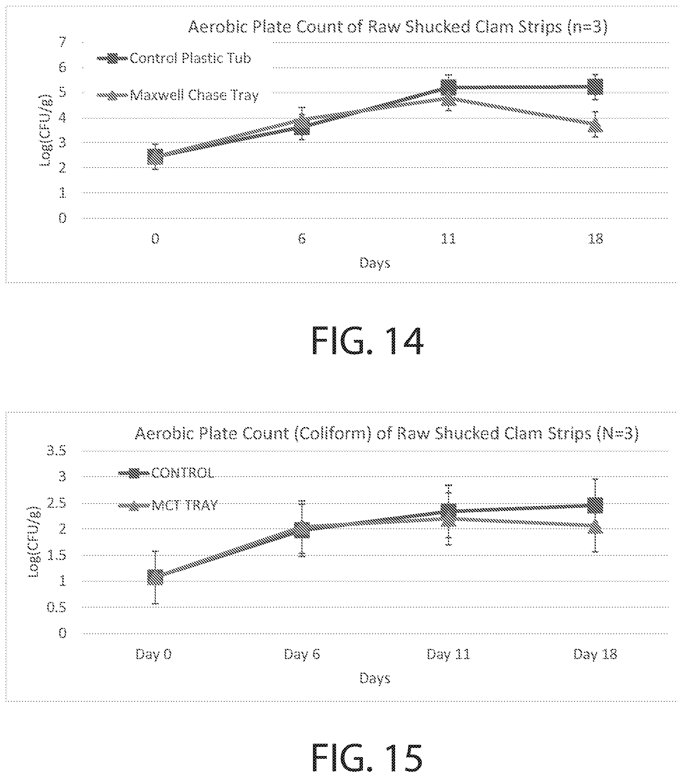

As shown in the above table and in the corresponding graph provided in Fig. 14, the MCT tray not only achieved lower counts in aerobic bacteria after about 6 days compared to the control, but held the aerobic bacteria count at a low level.

The APCs measuring coliform are also recorded, shown in Table 9 below (n=3, each about 25 g of clams).

**Table 9**

| | **COUNTS** | | **LOG** | |
|---|---|---|---|---|
| **Coliform count** | **CONTROL** | **MCT TRAY** | **CONTROL** | **MCT TRAY** |
| Day 0 | 12 | 12 | 1.075815 | 1.075815 |
| Day 6 | 95 | 110 | 1.979507 | 2.041655 |
| Day 11 | 218 | 159 | 2.337539 | 2.201572 |
| Day 18 | 285 | 116 | 2.454611 | 2.066132 |

Similar to aerobic bacteria counts, the MCT tray achieved lower counts in coliform after about 6 days compared to the control tray, and held the counts to a constant level, as clearly shown in the corresponding graph provided in Fig. 15.

### Example 8 - Percent Dead and Perception Score of Live Mussels

On day 0, live mussels were received in mesh bags in five or ten pound increments from a fishery. The mussels were stored in a Styrofoam cooler with flake ice or gel packs during shipment. Five pounds of mussels were taken out and stored in a storage container (approximately 12.5" x 10.5" x 2") generally similar to that shown in Fig. 1, with a lidding film sealed thereon to enclose the mussels. The sealed container was placed into a cooler at 4° C. An equal amount of mussels was left in the mesh bags (the industry standard for storage of live mussels) and stored at 4° C.

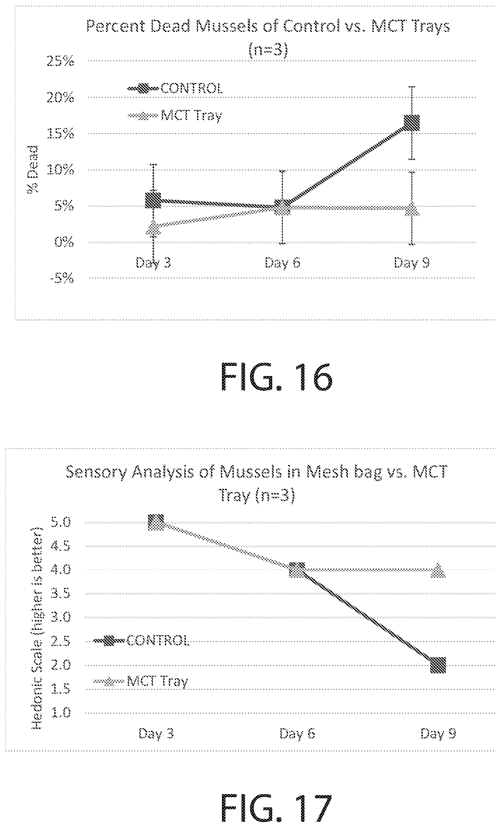

On each of days 3, 6 and 9, the mussels from three sealed storage containers and three corresponding control mesh bags were sampled. The percent dead and sensory perception by odor (average of 3) are reported in Tables 10 and 11, respectively (n =3). The data are plotted in the corresponding graphs in Figs. 16 and 17, respectively.

**Table 10**

| **% Open Mussels (dead mussels)** | | |
|---|---|---|
| **Day** | **CONTROL** | **MCT Tray** |
| Day 3 | 6% | 1% |
| Day 6 | 5% | 5% |
| Day 9 | 16% | 5% |

**Table 11**

| **Sensory - Odor (Hedonic Scale)** | | |
|---|---|---|
| **Day** | **CONTROL** | **MCT Tray** |
| Day 3 | 5.0 | 5.0 |
| Day 6 | 4.0 | 4.0 |
| Day 9 | 2.0 | 4.0 |

It is clear that mussels stored by the inventive method in the MCT Tray have a shelf life of at least 9 days by the number living (95%) and odor compared to the control mesh bag method. The minimal loss of live mussels and the preservation of freshness after 9 days far exceeds industry standard.

### Example 9 - Percent Dead of Live Oysters

On day 0, live pacific oysters were received in mesh bags by the dozen from a fishery. The oysters were stored in a Styrofoam cooler with flake ice or gel packs during shipment. Two dozen oysters were taken out and stored in each of three storage containers (approximately 12.5" x 10.5" x 2") generally similar to that shown in Fig. 1, with a lidding film sealed thereon to enclose the oysters. The sealed containers were placed into a cooler at 4° C. Three mesh bags (the industry standard), each containing a dozen oysters, were also stored in refrigerated conditions.

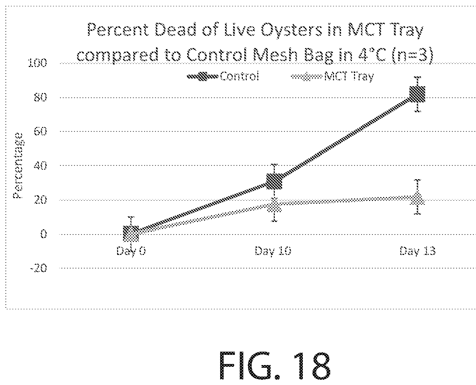

On days 10 and 13, the oysters from three sealed storage containers and three corresponding control mesh bags were sampled. The percent dead, rounded to the nearest 1, is recorded in Table 12 (n =3, average of three containers reported). The data is also reflected in the corresponding Fig. 18.

**Table 12**

| **Percentage Dead** | Day 0 | Day 10 | Day 13 |
|---|---|---|---|
| **Control (%)** | 0 | 31 | 82 |
| **MCT Tray (%)** | 0 | 17 | 22 |
| **Std Dev (%)** | 10 | | |

Live oysters stored by the inventive method in the MCT tray have a considerably longer shelf life compared to those stored in the control mesh bag. The loss of live oysters in a realistic storage period of about 10-13 days is minimized compared to the industry standard.

## Claims

1. A method of packaging and preserving comestible mollusk material comprising: placing comestible mollusk material in a product containing space of a storage container atop a platform of a support structure,
the storage container comprising an internal compartment having the product containing space, the support structure defining the platform for supporting the comestible mollusk material, the internal compartment further comprising a reservoir below the platform, the reservoir being configured to retain liquid and comprising an absorbent material, the platform and/or support structure being configured to direct liquid exuded from the comestible mollusk material to the reservoir, and
the storage container further comprising an oxygen permeable lid enclosing the comestible mollusk material within the product containing space.

2. The method of packaging and preserving comestible mollusk material of claim 1, the support structure defining the platform located above the reservoir, the support structure and/or platform comprising one or more of
a. a liquid permeable surface;
b. one or more openings; and
c. a ramp providing for liquid runoff from a side of the platform;
wherein the one or more of the liquid permeable surface, the one or more openings and the ramp providing for liquid runoff from a side of the platform, are configured to direct liquid exuded from the comestible mollusk material into the reservoir.

3. The method of packaging and preserving comestible mollusk material of claim 1 or 2, wherein the absorbent material comprises a gel-forming polymer.

4. The method of packaging and preserving comestible mollusk material of claim 3, wherein the gel-forming polymer is a food safe non-crosslinked water soluble polymer having a first absorbency, the first absorbency being defined by weight of liquid absorbed/weight of the at least one gel-forming polymer.

5. The method of packaging and preserving comestible mollusk material of claim 4, the absorbent material further comprising at least one food safe mineral composition having a second absorbency, the second absorbency being defined by weight of liquid absorbed/weight of the at least one mineral composition, the absorbency of the absorbent material exceeding the first absorbency and the second absorbency.

6. The method of packaging and preserving comestible mollusk material of claim 4 or 5, further comprising at least one food safe soluble salt having at least one trivalent cation.

7. The method of packaging and preserving comestible mollusk material of any one of claims 1 to 6, the absorbent material comprising:
a. at least one food safe non-crosslinked gel-forming water soluble polymer having a first absorbency, the first absorbency being defined by weight of liquid absorbed/weight of the at least one non-crosslinked gel forming polymer;
b. at least one food safe mineral composition having a second absorbency, the second absorbency being defined by weight of liquid absorbed/weight of the at least one mineral composition; and
c. at least one food safe soluble salt having at least one trivalent cation, the absorbency of the absorbent material exceeding a sum of the first absorbency and the second absorbency.

8. The method of packaging and preserving comestible mollusk material of claim 7, wherein
a. the non-crosslinked gel-forming water soluble polymer is carboxymethylcellulose; and
b. the mineral composition is clay.

9. The method of packaging and preserving comestible mollusk material of any one of claims 1 to 8, wherein the absorbent material comprises one or more odor absorbers optionally selected from the group consisting of zinc chloride, zinc oxide and citric acid.

10. The method of packaging and preserving comestible mollusk material of any one of claims 1 to 9, wherein the absorbent material comprises at least one antimicrobial agent, optionally at least one volatile antimicrobial agent and at least one non-volatile antimicrobial agent.

11. The method of packaging and preserving comestible mollusk material of any one of claims 1 to 10, wherein the lid comprises an oxygen permeable lidding film.

12. The method of packaging and preserving comestible mollusk material of any one of claims 1 to 11, the storage container further comprising an entrained polymer film material disposed within the internal compartment and made from a monolithic material comprising a base polymer, a channeling agent and a chlorine dioxide releasing agent.

13. The method of packaging and preserving comestible mollusk material of claim 12, wherein the antimicrobial releasing agent releases chlorine dioxide gas into the product containing space by reaction of moisture with the antimicrobial releasing agent.

14. The method of packaging and preserving comestible mollusk material of any previous claim, wherein the comestible mollusk material comprises scallops, octopus, squid, oysters, mussels, or clams.

15. A filled and closed package comprising an assembled storage container with comestible mollusk material stored in a product containing space within the storage container,
the storage container comprising an internal compartment having the product containing space and a support structure defining a platform for supporting the comestible mollusk material, the internal compartment further comprising a reservoir below the platform, the reservoir being configured to retain liquid, the platform and/or support structure being configured to direct liquid exuded from the comestible mollusk material to the reservoir, and
the storage container further comprising an absorbent material in the reservoir and an oxygen permeable lid disposed over an opening to the storage container to enclose the comestible mollusk material within the product containing space.

## Patentansprüche

1. Verfahren zum Verpacken und Konservieren von essbarem Molluskenmaterial, umfassend:
Platzieren von essbarem Molluskenmaterial in einen produktenthaltenden Raum eines Lagerbehälters auf eine Plattform einer Trägerstruktur,
wobei der Lagerbehälter eine Innenkammer mit dem produktenthaltenden Raum umfasst, die Trägerstruktur die Plattform zum Tragen des essbaren Molluskenmaterials definiert, die Innenkammer ferner ein Reservoir unter der Plattform umfasst, das Reservoir dafür gestaltet ist, Flüssigkeit zu halten, und ein absorptionsfähiges Material umfasst, die Plattform und/oder Trägerstruktur dafür gestaltet ist, von dem essbaren Molluskenmaterial exudierte Flüssigkeit zu dem Reservoir zu leiten, und
der Lagerbehälter ferner einen sauerstoffdurchlässigen Deckel umfasst, der das essbare Molluskenmaterial in dem produktenthaltenden Raum einschließt.

2. Verfahren zum Verpacken und Konservieren von essbarem Molluskenmaterial gemäß Anspruch 1,
wobei die Trägerstruktur die über dem Reservoir angeordnete Plattform definiert, wobei die Trägerstruktur und/oder Plattform eines oder mehrere umfasst von:
a. einer flüssigkeitsdurchlässigen Oberfläche;
b. einer oder mehreren Öffnungen; und
c. einer Rampe, die Ablaufen von Flüssigkeit von einer Seite der Plattform bereitstellt;
wobei das eine oder die mehreren von der flüssigkeitsdurchlässigen Oberfläche, der einen oder den mehreren Öffnungen und der Rampe, die Ablaufen von Flüssigkeit von einer Seite der Plattform bereitstellt, dafür gestaltet sind, von dem essbaren Molluskenmaterial exudierte Flüssigkeit in das Reservoir zu leiten.

3. Verfahren zum Verpacken und Konservieren von essbarem Molluskenmaterial gemäß Anspruch 1 oder 2, wobei das absorptionsfähige Material ein gelbildendes Polymer umfasst.

4. Verfahren zum Verpacken und Konservieren von essbarem Molluskenmaterial gemäß Anspruch 3, wobei das gelbildende Polymer ein lebensmittelsicheres nichtvernetztes wasserlösliches Polymer mit einem ersten Absorptionsvermögen ist, wobei das erste Absorptionsvermögen als Gewicht an absorbierter Flüssigkeit/Gewicht des wenigstens einen gelbildenden Polymers definiert ist.

5. Verfahren zum Verpacken und Konservieren von essbarem Molluskenmaterial gemäß Anspruch 4, wobei das absorptionsfähige Material ferner wenigstens eine lebensmittelsichere Mineralzusammensetzung mit einem zweiten Absorptionsvermögen umfasst, wobei das zweite Absorptionsvermögen als Gewicht an absorbierter Flüssigkeit/Gewicht der wenigstens einen Mineralzusammensetzung definiert ist, wobei das Absorptionsvermögen des absorptionsfähigen Materials das erste Absorptionsvermögen und das zweite Absorptionsvermögen übersteigt.

6. Verfahren zum Verpacken und Konservieren von essbarem Molluskenmaterial gemäß Anspruch 4 oder 5, ferner umfassend wenigstens ein lebensmittelsicheres lösliches Salz mit wenigstens einem dreiwertigen Kation.

7. Verfahren zum Verpacken und Konservieren von essbarem Molluskenmaterial gemäß einem der Ansprüche 1 bis 6, wobei das absorptionsfähige Material umfasst:
a. wenigstens ein lebensmittelsicheres nichtvernetztes gelbildendes wasserlösliches Polymer mit einem ersten Absorptionsvermögen, wobei das erste Absorptionsvermögen als Gewicht an absorbierter Flüssigkeit/Gewicht des wenigstens einen nichtvernetzten gelbildenden Polymers definiert ist;
b. wenigstens eine lebensmittelsichere Mineralzusammensetzung mit einem zweiten Absorptionsvermögen, wobei das zweite Absorptionsvermögen als Gewicht an absorbierter Flüssigkeit/Gewicht der wenigstens einen Mineralzusammensetzung definiert ist; und
c. wenigstens ein lebensmittelsicheres lösliches Salz mit wenigstens einem dreiwertigen Kation, wobei das Absorptionsvermögen des absorptionsfähigen Materials die Summe des ersten Absorptionsvermögens und des zweiten Absorptionsvermögens übersteigt.

8. Verfahren zum Verpacken und Konservieren von essbarem Molluskenmaterial gemäß Anspruch 7, wobei
a. das nichtvernetzte gelbildende wasserlösliche Polymer Carboxymethylcellulose ist; und
b. die Mineralzusammensetzung Ton ist.

9. Verfahren zum Verpacken und Konservieren von essbarem Molluskenmaterial gemäß einem der Ansprüche 1 bis 8, wobei das absorptionsfähige Material einen oder mehrere Geruchsabsorber, gegebenenfalls ausgewählt aus der Gruppe bestehend aus: Zinkchlorid, Zinkoxid und Citronensäure, umfasst.

10. Verfahren zum Verpacken und Konservieren von essbarem Molluskenmaterial gemäß einem der Ansprüche 1 bis 9, wobei das absorptionsfähige Material wenigstens ein antimikrobielles Mittel, gegebenenfalls wenigstens ein flüchtiges antimikrobielles Mittel und wenigstens ein nichtflüchtiges antimikrobielles Mittel, umfasst.

11. Verfahren zum Verpacken und Konservieren von essbarem Molluskenmaterial gemäß einem der Ansprüche 1 bis 10, wobei der Deckel einen sauerstoffdurchlässigen Deckelfilm umfasst.

12. Verfahren zum Verpacken und Konservieren von essbarem Molluskenmaterial gemäß einem der Ansprüche 1 bis 11, wobei der Lagerbehälter ferner ein mitgeführtes Polymerfilmmaterial umfasst, das in der Innenkammer angeordnet ist und aus einem monolithischen Material hergestellt ist, das ein Grundpolymer, ein kanalbildendes Mittel und ein Chlordioxid-freisetzendes Mittel umfasst.

13. Verfahren zum Verpacken und Konservieren von essbarem Molluskenmaterial gemäß Anspruch 12, wobei das antimikrobielles Mittel freisetzende Mittel durch Reaktion von Feuchte mit dem antimikrobielles Mittel freisetzende Mittel Chlordioxidgas in den produktenthaltenden Raum freisetzt.

14. Verfahren zum Verpacken und Konservieren von essbarem Molluskenmaterial gemäß einem der vorstehenden Ansprüche, wobei das essbare Molluskenmaterial Jakobsmuscheln, Oktopus, Kalamar, Austern, Miesmuscheln oder Muscheln umfasst.

15. Gefüllte und geschlossene Verpackung, umfassend einen zusammengesetzten Lagerbehälter, wobei essbares Molluskenmaterial in einem produktenthaltenden Raum im Inneren des Lagerbehälters enthalten ist,
wobei der Lagerbehälter eine Innenkammer mit dem produktenthaltenden Raum und einer Trägerstruktur, die eine Plattform zum Tragen des essbaren Molluskenmaterials definiert, umfasst, die Innenkammer ferner ein Reservoir unter der Plattform umfasst, das Reservoir dafür gestaltet ist, Flüssigkeit zu halten, die Plattform und/oder Trägerstruktur dafür gestaltet ist, von dem essbaren Molluskenmaterial exudierte Flüssigkeit zu dem Reservoir zu leiten, und
der Lagerbehälter ferner ein absorptionsfähiges Material in dem Reservoir umfasst und ein sauerstoffdurchlässiger Deckel über einer Öffnung zu dem Lagerbehälter angeordnet ist, um das essbare Molluskenmaterial in dem produktenthaltenden Raum einzuschließen.

## Revendications

1. Procédé d'emballage et de conservation de matière de mollusque comestible comprenant : la mise en place de matière de mollusque comestible dans un espace d'accueil de produit d'un récipient de stockage au-dessus d'une plate-forme d'une structure de support,
le récipient de stockage comprenant un compartiment interne ayant l'espace d'accueil de produit, la structure de support définissant la plate-forme destinée à supporter la matière de mollusque comestible, le compartiment interne comprenant en outre un réservoir sous la plate-forme, le réservoir étant configuré pour retenir du liquide et comprenant un matériau absorbant, la plate-forme et/ou la structure de support étant configurées pour diriger du liquide exsudé depuis la matière de mollusque comestible jusqu'au réservoir, et
le récipient de stockage comprenant en outre un couvercle perméable à l'oxygène enfermant la matière de mollusque comestible à l'intérieur de l'espace d'accueil de produit.

2. Procédé d'emballage et de conservation de matière de mollusque comestible de la revendication 1, la structure de support définissant la plate-forme située au-dessus du réservoir, la structure de support et/ou la plate-forme comprenant un ou plusieurs éléments parmi :
a. une surface perméable aux liquides ;
b. une ou plusieurs ouvertures ; et
c. une rampe permettant l'écoulement de liquide depuis un côté de la plate-forme ;
dans lequel le ou les éléments parmi la surface perméable aux liquides, la ou les ouvertures et la rampe permettant l'écoulement de liquide depuis un côté de la plate-forme sont configurés pour diriger du liquide exsudé depuis la matière de mollusque comestible jusqu'à l'intérieur du réservoir.

3. Procédé d'emballage et de conservation de matière de mollusque comestible de la revendication 1 ou 2, dans lequel le matériau absorbant comprend un polymère formant un gel.

4. Procédé d'emballage et de conservation de matière de mollusque comestible de la revendication 3, dans lequel le polymère formant un gel est un polymère hydrosoluble non réticulé de qualité alimentaire ayant une première capacité d'absorption, la première capacité d'absorption étant définie par le poids de liquide absorbé/le poids de l'au moins un polymère formant un gel.

5. Procédé d'emballage et de conservation de matière de mollusque comestible de la revendication 4, le matériau absorbant comprenant en outre au moins une composition minérale de qualité alimentaire ayant une deuxième capacité d'absorption, la deuxième capacité d'absorption étant définie par le poids de liquide absorbé/le poids de l'au moins une composition minérale, la capacité d'absorption du matériau absorbant dépassant la première capacité d'absorption et la deuxième capacité d'absorption.

6. Procédé d'emballage et de conservation de matière de mollusque comestible de la revendication 4 ou 5, comprenant en outre au moins un sel soluble de qualité alimentaire ayant au moins un cation trivalent.

7. Procédé d'emballage et de conservation de matière de mollusque comestible de l'une quelconque des revendications 1 à 6, le matériau absorbant comprenant :
a. au moins un polymère hydrosoluble formant un gel non réticulé de qualité alimentaire ayant une première capacité d'absorption, la première capacité d'absorption étant définie par le poids de liquide absorbé/le poids de l'au moins un polymère formant un gel non réticulé ;
b. au moins une composition minérale de qualité alimentaire ayant une deuxième capacité d'absorption, la deuxième capacité d'absorption étant définie par le poids de liquide absorbé/le poids de l'au moins une composition minérale ; et
c. au moins un sel soluble de qualité alimentaire ayant au moins un cation trivalent, la capacité d'absorption du matériau absorbant dépassant une somme de la première capacité d'absorption et de la deuxième capacité d'absorption.

8. Procédé d'emballage et de conservation de matière de mollusque comestible de la revendication 7, dans lequel
a. le polymère hydrosoluble formant un gel non réticulé est la carboxyméthylcellulose ; et
b. la composition minérale est l'argile.

9. Procédé d'emballage et de conservation de matière de mollusque comestible de l'une quelconque des revendications 1 à 8, dans lequel le matériau absorbant comprend un ou plusieurs absorbeurs d'odeur éventuellement choisis dans le groupe constitué par : le chlorure de zinc, l'oxyde de zinc et l'acide citrique.

10. Procédé d'emballage et de conservation de matière de mollusque comestible de l'une quelconque des revendications 1 à 9, dans lequel le matériau absorbant comprend au moins un agent antimicrobien, éventuellement au moins un agent antimicrobien volatil et au moins un agent antimicrobien non volatil.

11. Procédé d'emballage et de conservation de matière de mollusque comestible de l'une quelconque des revendications 1 à 10, dans lequel le couvercle comprend un film d'operculage perméable à l'oxygène.

12. Procédé d'emballage et de conservation de matière de mollusque comestible de l'une quelconque des revendications 1 à 11, le récipient de stockage comprenant en outre un matériau en film de polymère entraîné disposé à l'intérieur du compartiment interne et fabriqué à partir d'un matériau monolithique comprenant un polymère de base, un agent de canalisation et un agent de libération de dioxyde de chlore.

13. Procédé d'emballage et de conservation de matière de mollusque comestible de la revendication 12, dans lequel l'agent de libération antimicrobien libère du dioxyde de chlore gazeux à l'intérieur de l'espace d'accueil de produit par réaction d'humidité avec l'agent de libération antimicrobien.

14. Procédé d'emballage et de conservation de matière de mollusque comestible d'une quelconque revendication précédente, dans lequel la matière de mollusque comestible comprend des coquilles Saint-Jacques, du poulpe, du calamar, des huîtres, des moules, ou des palourdes.

15. Emballage rempli et fermé comprenant un récipient de stockage assemblé avec de la matière de mollusque comestible stockée dans un espace d'accueil de produit à l'intérieur du récipient de stockage,
le récipient de stockage comprenant un compartiment interne ayant l'espace d'accueil de produit et une structure de support définissant une plate-forme destinée à supporter la matière de mollusque comestible, le compartiment interne comprenant en outre un réservoir sous la plate-forme, le réservoir étant configuré pour retenir du liquide, la plate-forme et/ou la structure de support étant configurées pour diriger du liquide exsudé depuis la matière de mollusque comestible jusqu'au réservoir, et
le récipient de stockage comprenant en outre un matériau absorbant dans le réservoir et un couvercle perméable à l'oxygène disposé sur une ouverture du récipient de stockage pour enfermer la matière de mollusque comestible à l'intérieur de l'espace d'accueil de produit.
